# FASCICULE DE BREVET EUROPEEN

(11) **EP 2 935 407 B1**
(45) Date de publication et mention de la délivrance du brevet: **26.10.2016**
(21) Numéro de dépôt: 13821856.5
(22) Date de dépôt: 19.12.2013
(51) Int. Cl.: C08G 77/18, C08L 83/04, F16J 15/10, C08K 3/04, C08K 5/31, C08K 5/544

(54) **PROCÉDÉ ET COMPOSITIONS UTILES POUR L'ÉTANCHEIFICATION ET L'ASSEMBLAGE DE COMPOSANTS D'UN GROUPE MOTO-PROPULSEUR**
VERFAHREN UND ZUSAMMENSETZUNGEN ZUR ABDICHTUNG UND MONTAGE VON KOMPONENTEN EINES ANTRIEBSSTRANGS
METHOD AND COMPOSITIONS THAT CAN BE USED FOR SEALING AND ASSEMBLING COMPONENTS OF A POWERTRAIN

(30) Priorité: 20.12.2012 FR 1203539
(43) Date de publication de la demande: 28.10.2015
(73) Titulaire: Bluestar Silicones France SAS, 69003 Lyon (FR)
(72) Inventeur: IRELAND, Tania, 38110 CESSIEU (FR); SICRE, Romain, F-69190 Saint-Fons (FR)
(74) Mandataire: Mekki, Boualem
(86) Numéro de dépôt international: PCT/FR2013/000356
(87) Numéro de publication internationale: WO 2014/096573

(56) Documents cités:
- WO-A1-2011/114021

## Description

La présente invention a pour objet une composition silicone réticulable en élastomère et un procédé utilisant la composition selon l'invention pour former des joints d'étanchéité et d'assemblage des composants d'un groupe moto-propulseur. Les élastomères silicones préparés à partir de la composition selon l'invention présentent:
- de bonnes propriétés de résistance mécanique telles que la dureté shore, la résistance à la rupture, le module à 100 % d'allongement et.
- une bonne résistance au vieillissement dans des fluides agressifs chimiquement tels que ceux utilisés par exemple dans un groupe motopropulseur en l'occurrence les huiles moteur, les lubrifiants pour boîte de vitesse et pont, les mélanges huile/essence, les liquides de refroidissement, les fuels ou les liquides antigel, et
- de bonnes propriétés d'adhésion même sur des surfaces polluées par des huiles utilisées dans un groupe motopropulseur.

Par "liquide de refroidissement", on entend tout liquide caloporteur utilisé pour évacuer les calories d'un système mécanique ou électronique.

Les compositions silicones réticulables en élastomère pour former des joints d'étanchéité sont connues. En effet, elles conviennent en particulier pour la formation de joints d'étanchéité "in-situ", qui sont formés directement lors de l'assemblage des éléments, en particulier dans le domaine de l'automobile.

Parmi les compositions silicones réticulables en élastomère connues pour ce type d'application, celles qui réticulent dès la température ambiante forment une catégorie qui attire toute l'attention car elles ne nécessitent pas la mise en place de four consommateur d'énergie.

Ces compositions silicones sont classées en 2 groupes distincts: les compositions monocomposantes (RTV-1) et les compositions bi-composantes (RTV-2). Le terme "RTV" est l'acronyme pour "Room Temperature Vulcanising".

Lors de la réticulation, l'eau (soit apportée par une humidité atmosphérique dans le cas des RTV-1, soit introduite dans une partie de la composition dans le cas des RTV-2) permet la réaction de polycondensation, qui conduit à la formation du réseau élastomère.

Généralement, les compositions monocomposantes (RTV-1) réticulent quand elles sont exposées à l'humidité de l'air. Le plus souvent, la cinétique des réactions de polycondensation est extrêmement lente; ces réactions sont donc catalysées par un catalyseur approprié.

De plus, face à une industrie du transport en pleine évolution, on voit apparaître de nouvelles contraintes liées à l'augmentation des rendements moteurs, à l'augmentation des températures de fonctionnement, à la diminution de la consommation en carburant et à la diminution de la fréquence d'entretien.

Ainsi, les formulateurs de fluides moto-propulseurs (huile moteur, lubrifiant pour boite de vitesse et pont, mélange huile/essence, liquide de refroidissement, fuel ou liquide antigel) continuent d'améliorer les performances de ces produits par l'addition d'additifs de plus en plus efficaces. La quantité d'additifs incorporée dans ces produits augmente de plus en plus, ce qui a pour effet d'augmenter leur agressivité chimique vis à vis des organes souples, par exemple les joints d'étanchéité, présents dans les dispositifs dans lesquels ces produits sont utilisés.

La demande de brevet JP-A-2009197188 décrit des compositions silicones ayant une bonne résistance au contact des différents fluides utilisés dans un groupe moto-propulseur mais ces compositions comprennent des huiles réticulables complexes et coûteuses qui contiennent une rotule alkylène en C1 à C5 et représenté par le symbole Y dans les formules suivantes :

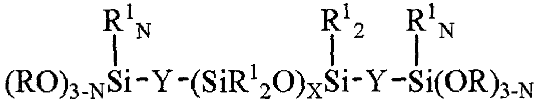

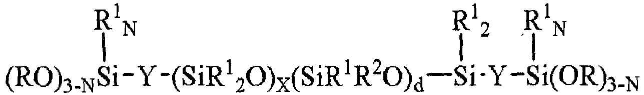

La demande de brevet EP2151480 décrit des compositions silicones ayant une bonne résistance au contact des différents fluides utilisés dans un groupe moto-propulseur mais ces compositions comprennent entre autres un carbonate de calcium traité en surface.

La demande de brevet PCT/FR2012/000364 décrit des compositions silicones ayant une bonne résistance au contact des différents fluides utilisés dans un groupe moto-propulseur mais ces compositions comprennent une quantité strictement supérieure à 35% en poids par rapport à la quantité totale de la composition d'au moins un carbonate de calcium naturel broyé qui a une surface spécifique strictement inférieure à 3 m²/g, mesurée selon la méthode BET et a été traité en surface par au moins un composé choisi parmi le groupe constitué par une paraffine, un acide gras, un sel d'un acide gras et leur mélange.

Le brevet US5641832 décrit des compositions silicones ayant une bonne résistance au contact des différents fluides utilisés dans un groupe moto-propulseur mais ces compositions comprennent une charge préparée par imprégnation d'une charge poreuse avec un composé organique volatil incompatible ou partiellement incompatible avec le polyorganosiloxane mis en oeuvre.

La demande de brevet WO2011/114021 décrit des compositions silicones ayant une bonne résistance au contact des différents fluides utilisés dans un groupe motopropulseur mais ces compositions comprennent au moins un siloxane qui est un condensat obtenu par hydrolyse partielle et condensation d'un silane polyalcoxylé, le dit siloxane ayant de 2 à 10 motifs siloxyles, identiques ou différents, de formule:

(R2)_{x'}(OR³)_{y'}SiO_{[4-(x'+y')]/2}

dans laquelle :
- x'= 0, 1, 2 ou 3; y'= 0, 1, 2 ou 3, x'+y'= 0, 1, 2 ou 3,
- le symbole R² représente un radical monovalent hydrocarboné en C₁ à C₁₃, et
- le symbole R³ représente un radical monovalent hydrocarboné en C₁ à C₆ ou un radical alkoxyalkyle comprenant éventuellement une fonction ester, et
- avec la condition que pour au moins un motif siloxyle l'indice y' soit ≥1.

Ces compositions présentent les désavantages de conduire après leur vieillissement à des élastomères dont les propriétés mécaniques et de résistance aux huiles moteurs et d'adhérence sur surface polluée sont dégradées.

Il existe donc un besoin croissant pour trouver de nouvelles compositions silicones utiles pour former des joints d'étanchéité et d'assemblage des composants d'un groupe moto-propulseur, même sur des surfaces polluées par des huiles et cela même après vieillissement de ces nouvelles compositions.

Ainsi, un des objectifs essentiels de la présente invention est de proposer de nouvelles compositions d'organopolysiloxanes durcissant en un élastomère silicone en présence d'eau ou d'humidité utiles pour l'étanchéification et l'assemblage des éléments d'un groupe moto-propulseur.

Un autre objectif est de proposer un nouveau procédé d'étanchéification et d'assemblage de composants d'un groupe moto-propulseur au moyen de joints silicones ayant une bonne résistance au contact des différents fluides utilisés dans un groupe moto-propulseur tout en ayant de bonnes propriétés d'adhésion sur surface polluée et cela après vieillissement de ces nouvelles compositions.

Ces objectifs, parmi d'autres, sont atteints par la présente invention qui concerne une composition polyorganosiloxane **X** réticulable en élastomère en présence d'humidité apportée par l'air ambiant ou par addition préalable d'eau par des réactions de polycondensation comprenant:
A) au moins un polyorganosiloxane **A** comprenant au moins un groupement alcoxylé et constitué de motifs siloxyles identiques ou différents, de formule :

   (Z)_{b}(R⁴)ₐSiO_{[4-(a+b)]/2} **(1)**

   dans laquelle :
   - le symbole Z = [-(OCH₂CH₂)_{c}-OR⁵], avec c=0 ou 1,
   - a= 0, 1, 2 ou 3; b= 0, 1, 2 ou 3, a+b= 0, 1, 2 ou 3,
   - le symbole R⁴ représente un radical monovalent hydrocarboné en C₁ à C₁₃,
   - le symbole R⁵ représente un radical monovalent hydrocarboné en C₁ à C₆ ou un radical alkoxyalkyle comprenant éventuellement une fonction ester, et
   - avec la condition que pour au moins un motif siloxyle l'indice b≥1 de manière à ce que le polyorganosiloxane **A** contienne au moins un groupement alcoxylé Z,
B) éventuellement au moins un silane polyalcoxylé **B** de formule :

   (R²)_{z}Si(OR³)_{(4-z)} **(2)**

   dans laquelle :
   - z = 0 ou 1,
   - le symbole R² représente un radical monovalent hydrocarboné en C₁ à C₁₃, et
   - les symboles R³, identiques ou différents, représentent chacun un radical monovalent hydrocarboné en C₁ à C₆ ou un radical alkoxyalkyle présentant éventuellement une fonction ester
C) au moins un noir d'acétylène **D** ayant pour fonction d'absorber une huile utilisée dans un groupe moto-propulseur,
D) au moins un tri-hydrate d'aluminium **E** en tant que charge minérale,
E) au moins un promoteur d'adhérence **F** porteur d'au moins une fonction amine,
F) une quantité catalytiquement efficace d'au moins une guanidine **G** en tant que catalyseur de condensation,
G) éventuellement au moins un polyorganosiloxane linéaire non réactif **H,** ce réactif pouvant agir sur les caractéristiques physiques des compositions conformes à l'invention et/ou sur les propriétés mécaniques des élastomères issus du durcissement de ces compositions.
H) éventuellement au moins une charge **I**, différente de **E,** et
I) éventuellement au moins un additif J tel qu'une base colorante, un pigment ou un agent thixotropant.
avec les conditions supplémentaires que
- ladite composition polyorganosiloxane **X** ne contient ni carbonate de calcium ni siloxane ayant de 2 à 10 motifs siloxyles obtenu par hydrolyse partielle et condensation d'un silane polyalcoxylé, et que
- le polyorganosiloxane A présente un nombre de motifs strictement supérieur à 10, de préférence supérieur à 20 et au maximum égal à 2000.

Pour atteindre cet objectif, la Demanderesse a eu le mérite de mettre en évidence, de manière tout à fait surprenante et inattendue, que l'utilisation d'au moins un noir d'acétylène **D** ayant pour fonction d'adsorber une huile utilisée dans un groupe moto-propulseur en association avec au moins un tri-hydrate d'aluminium **E** en tant que charge minérale et au moins un promoteur d'adhérence **F** porteur d'au moins une fonction amine, permet de préparer des joints assurant l'étanchéification et l'assemblage, de composants ou d'éléments utilisés dans un groupe moto-propulseur et ceci même avec des polyorganosiloxanes alcoxylés ne présentant pas de rotule alkyle tels que décrits dans la demande de brevet JP-A-2009197188 et même en l'absence de carbonate de calcium ou de siloxane qui soit un condensat obtenu par hydrolyse partielle et condensation d'un silane polyalcoxylé, tels que décrits dans les demandes de brevet PCT/FR2012/000364 et WO2011/114021.

De plus, les élastomères silicones préparés à partir de la composition selon l'invention présentent l'avantage de maintenir de bonnes propriétés mécaniques même lorsqu'ils sont en contact prolongé avec des fluides agressifs sur le plan chimique tels que ceux utilisés par exemple dans un groupe moto-propulseur et cela même après vieillissement de la composition.

Comme exemple de fluides agressifs sur le plan chimique on peut citer les huiles pour moteur, les lubrifiants pour boite de vitesse et pont, les mélanges huiles/essence, les liquides de refroidissement, les fuels et les liquides antigel.

De préférence, la composition polyorganosiloxane **X,** comprend:
A) au moins un polyorganosiloxane **A** comprenant au moins un groupement alcoxylé et constitué de motifs siloxyles identiques ou différents, de formule :

   (Z)_{b}(R⁴)ₐSiO_{[4-(a+b)]/2} **(1)**

   dans laquelle :
   a. le symbole Z = [-(OCH₂CH₂)_{c}-OR⁵], avec c=0 ou 1,
   b. a= 0, 1, 2 ou 3; b= 0, 1, 2 ou 3, a+b= 0, 1, 2 ou 3,
   c. le symbole R⁴ représente un radical monovalent hydrocarboné en C₁ à C₁₃,
   d. le symbole R⁵ représente un radical monovalent hydrocarboné en C₁ à C₆ ou un radical alkoxyalkyle comprenant éventuellement une fonction ester, et
   e. avec la condition que pour au moins un motif siloxyle l'indice b≥1 de manière à ce que le polyorganosiloxane **A** contienne au moins un groupement alcoxylé Z,
B) au moins un silane polyalcoxylé **B** de formule :

   (R²)_{z}Si(OR³)_{(4-z)} **(2)**

   dans laquelle :
   - z = 0 ou 1,
   - le symbole R² représente un radical monovalent hydrocarboné en C₁ à C₁₃, et
   - les symboles R³, identiques ou différents, représentent chacun un radical monovalent hydrocarboné en C₁ à C₆ ou un radical alkoxyalkyle présentant éventuellement une fonction ester
C) au moins un noir d'acétylène **D** ayant pour fonction d'absorber une huile utilisée dans un groupe moto-propulseur,
D) au moins un tri-hydrate d'aluminium **E** en tant que charge minérale,
E) au moins un promoteur d'adhérence **F** porteur d'au moins une fonction amine,
F) une quantité catalytiquement efficace d'au moins une guanidine **G** en tant que catalyseur de condensation,
G) éventuellement au moins un polyorganosiloxane linéaire non réactif **H,** ce réactif pouvant agir sur les caractéristiques physiques des compositions conformes à l'invention et/ou sur les propriétés mécaniques des élastomères issus du durcissement de ces compositions.
H) éventuellement au moins une charge **I**, différente de **E,** et
I) éventuellement au moins un additif **J** tel qu'une base colorante, un pigment ou un agent thixotropant.
avec les conditions supplémentaires que
- ladite composition polyorganosiloxane **X** ne contient ni carbonate de calcium ni siloxane ayant de 2 à 10 motifs siloxyles obtenu par hydrolyse partielle et condensation d'un silane polyalcoxylé, et que
- le polyorganosiloxane A présente un nombre de motifs strictement supérieur à 10, de préférence supérieur à 20 et au maximum égal à 2000.

De préférence, la composition polyorganosiloxane **X** se présente sous la forme d'un monocomposant RTV1 c'est-à-dire en un seul emballage étanche à l'air.

De préférence, le polyorganosiloxane réticulable **A** est linéaire et a pour formule développée: 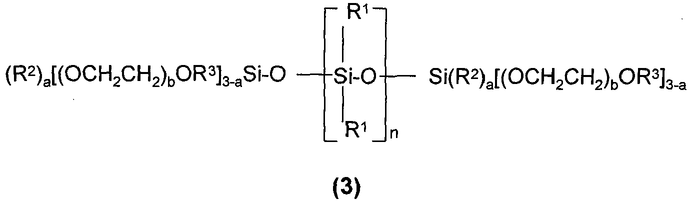 dans laquelle :
- les substituants R1, identiques ou différents, représentent chacun un radical monovalent hydrocarboné saturé ou non en C₁ à C₁₃, substitué ou non substitué, aliphatique, cyclanique ou aromatique ;
- les substituants R2, identiques ou différents, représentent chacun un radical monovalent hydrocarboné saturé ou non en C₁ à C₁₃, substitué ou non substitué, aliphatique, cyclanique ou aromatique ;
- les substituants R3, identiques ou différents, représentent chacun un radical alkyle, linéaire ou ramifié, en C₁ à C₆ ;
- n a une valeur suffisante pour conférer au polyorganopolysiloxane de formule A une viscosité dynamique à 25°C allant de 1.000 à 1.000.000 mPa.s ; et
- l'indice a est égal à zéro ou 1 et l'indice b est égal à zéro ou 1 ;

Selon un autre mode de réalisation préféré, le polyorganosiloxane **A** comprenant au moins un groupement alcoxylé est obtenu en faisant réagir, éventuellement in-situ, en présence d'une quantité catalytiquement efficace d'au moins un catalyseur C de fonctionnalisation:
a) au moins un polyorganosiloxane **A'** comprenant des motifs siloxyles de formule :

   (R¹)ₓ(OH)_{y}SiO_{(4-x-y)//2} **(4)**

   dans laquelle :
   - x= 0, 1, 2 ou 3; y= 0, 1, 2 ou 3, x+y= 0, 1, 2 ou 3;
   - les substituants R¹, identiques ou différents, représentent chacun un radical monovalent hydrocarboné en C₁ à C₃₀ et choisi parmi le groupe constitué par les radicaux alkyles, cycloalkyles, aryles ; alkaryles et aralkyles, et
   - au moins deux motifs siloxyles comprenant un groupement ≡SiOH sont présents dans le polyorganosiloxane **A',** avec
b) au moins un silane polyalcoxylé **B** de formule :

   (R²)_{z}Si(OR³)_{(4-z)} **(2)**

   dans laquelle :
   - z = 0 ou 1,
   - le symbole R² représente un radical monovalent hydrocarboné en C₁ à C₁₃, et
   - les symboles R³, identiques ou différents, représentent chacun un radical monovalent hydrocarboné en C₁ à C₆ ou un radical alkoxyalkyle présentant éventuellement une fonction ester,

Selon un autre mode de réalisation préféré, le polyorganosiloxane **A'** est de préférence un polymère α,ω-dihydroxypolydiorganosiloxane, de viscosité comprise entre 1000 et 1 000 000 mPa.s à 25°C.

Les silanes polyalcoxylés **B** sont des produits accessibles sur le marché des silicones ; de plus leur emploi dans les compositions durcissant dès la température ambiante est connu ; il figure notamment dans les brevets français FR-A-1 126 411, FR-A-1 179 969, FR-A-1 189 216, FR-A-1 198 749, FR-A-1 248 826, FR-A-1 314 649, FR-A-1 423 477, FR-A-1 432 799 et FR-A-2 067 636.

Comme exemples de silanes polyalcoxylés **B ,** on peut citer ceux de formule:

Si(OCH₃)₄

Si(OCH₂CH₃)₄

Si(OCH₂CH₂CH₃)₄

(CH₃O)₃SiCH₃

(C₂H₅O)₃SiCH₃

(CH₃O)₃Si(CH=CH₂)

(C₂H₅O)₃Si(CH=CH₂)

(CH₃O)₃Si(CH₂-CH=CH₂)

(CH₃O)₃Si[CH₂-(CH₃)C=CH₂]

(C₂H₅O)₃Si(OCH₃)

Si(OCH₂-CH₂-OCH₃)₄

CH₃Si(OCH₂-CH₂-OCH₃)₃

(CH₂=CH)Si(OCH₂CH₂OCH₃)₃

C₆H₅Si(OCH₃)₃

C₆H₅Si(OCH₂-CH₂-OCH₃)₃.

La préparation de polyorganosiloxane comprenant des groupements alcoxylés par fonctionnalisation est décrite par exemple dans la demande de brevet français n° FR2638752-A1.

De préférence le catalyseur **C** de fonctionnalisation est la lithine (ou hydroxyde de lithium) ou la potasse.

La lithine se trouve largement dans le commerce. De préférence elle est utilisée en solution dans un alcool, tel que par exemple du méthanol ou de l'éthanol.

L'introduction d'au moins un noir d'acétylène **D** a pour fonction d'absorber une huile utilisée dans un groupe moto-propulseur. Il est obtenu par craquage thermique de l'acétylène et se présente sous forme de poudre. Ainsi, ces noirs d'acétylène présentent une surface spécifique plus faible que celle des charbons actifs généralement utilisés comme support de catalyseur. Cette surface spécifique est généralement comprise entre 50 et 100 m2/g. Ces noirs d'acétylène se distinguent également par d'autres caractéristiques techniques telles que leur structure cristalline, leur état d'oxydation, une pureté chimique élevée et une grande porosité. A titre d'exemple, on peut citer comme noirs d'acétylène convenables pour l'invention les noirs commercialisés par la société SN2A, sous les dénominations commerciales Y70, Y200, Y50, YS. Pour en facilité l'incorporation, ces noirs d'acétylène peuvent être introduits sous forme d'empâtage à savoir en mélange avec au moins une huile polyorganosiloxane.

L'introduction d'au moins un trihydrate d'aluminium **E,** pouvant avoir été modifiée en surface, a pour but de conférer de bonnes caractéristiques mécaniques et rhéologiques aux élastomères découlant du durcissement des compositions conformes à l'invention. Les trihydrate d'aluminium sont également appelés hydrate d'alumine, tri hydroxyde d'aluminium, ATH, hydrate d'aluminium et hydroxyde d'aluminium. La représentation Al(OH)₃, constituée d'un ion Al³⁺ lié à trois ions OH⁻, est très simplifiée, et le composé est généralement plus ou moins hydraté. Une représentation plus rigoureuse serait donc Al₂O₂.xH₂O pour les trois oxydes/hydroxydes. Certains silanes couramment utilisés dans le traitement de l'ATH sont décrits dans les brevets US 4.526.922 et 4.550.056.

La composition selon l'invention peut comprendre au moins un promoteur d'adhérence F porteur d'au moins une fonction amine tel que par exemple:

[H₂N(CH₂)₃]Si(OCH₂CH₂CH₃)₃,

[H₂N(CH₂)₃]Si(OCH₃)₃

[H₂N(CH₂)₃]Si(OC₂H₅)₃

[H₂N(CH₂)₄]Si(OCH₃)₃

[H₂NCH₂CH(CH₃)CH₂CH₂]SiCH₃(OCH₃)₂

[H₂NCH₂]Si(OCH₃)₃

[n-C₄H₉-HN-CH₂]Si(OCH₃)₃

[H₂N(CH₂)₂NH(CH₂)₃]Si(OCH₃)₃

[H₂N(CH₂)₂NH(CH₂)₃]Si(OCH2CH₂OCH₃)₃

[CH₃NH(CH₂)₂NH(CH₂)₃]Si(OCH₃)₃

[H(NHCH₂CH₂)₂NH(CH₂)₃]Si(OCH₃)₃

HS(CH₂)₃Si(OCH₃)₃

NH2CONH2(CH₂)₃Si(OCH₃)₃

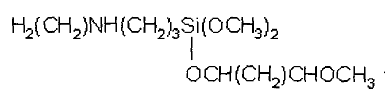

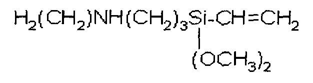

ou des oligomères polyorganosiloxaniques contenant de tels groupes organiques à une teneur supérieure à 20%.

Selon un mode de réalisation préféré, le catalyseur de condensation G est une guanidine répondant à la formule générale **(I)**: 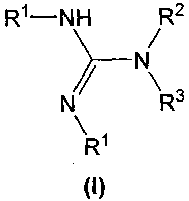 dans laquelle,
- les radicaux R¹, identiques ou différents, représentent, indépendamment l'un de l'autre, un groupe alkyle monovalent linéaire ou ramifié, un groupement cycloalkyle, un groupe (cycloalkyl)alkyle, le cycle étant substitué ou non et pouvant comprendre au moins un hétéroatome ou un groupement fluoroalkyle,
- le radical R² représente un atome d'hydrogène, un groupement alkyle monovalent linéaire ou ramifié, un groupement cycloalkyle, un groupement alkyle substitué par un cycle, substitué ou non et pouvant comprendre au moins un hétéroatome, un groupement aromatique un groupe arylalkyle, un groupement fluoroalkyle, un groupement alkylamine ou alkylguanidine, et
- le radical R³ représente un groupement alkyle monovalent linéaire ou ramifié, un groupement cycloalkyle, un groupement alkyle substitué par un cycle, substitué ou non et pouvant comprendre au moins un hétéroatome, un groupement arylalkyle, fluoroalkyle, alkylamine ou alkylguanidine,
- lorsque le radical R² n'est pas un atome d'hydrogène, les radicaux R² et R³ peuvent être liés pour former un cycle aliphatique à 3, 4, 5, 6 ou 7 chaînons éventuellement substitué par un ou plusieurs substituants.

Il s'agit de guanidines 1,2,3-trisubstituées et 1,2,3,3-tétrasubstituées et présentent l'avantage d'être liquides, incolores, inodores et solubles dans les matrices silicones. Des exemples de ce type de catalyseurs sont décrits dans la demande de brevet internationale WO2009/118307.

De préférence on utilisera les catalyseurs **(A1)** à **(A6)** suivants:

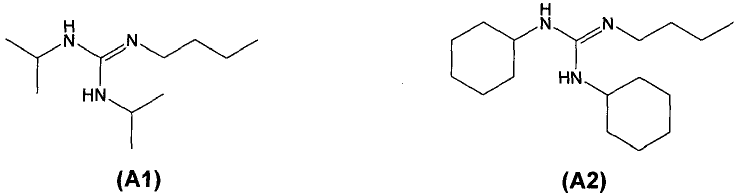

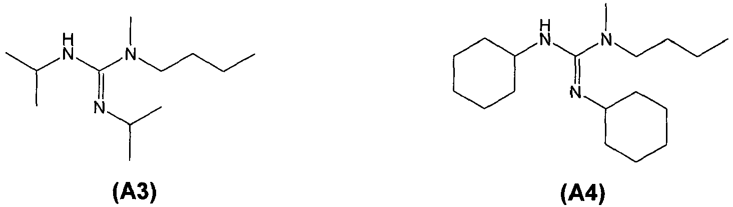

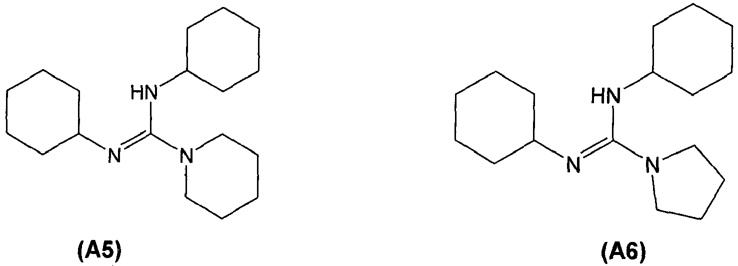

Selon un autre mode de réalisation préféré, le catalyseur de condensation **G** est une guanidine de formule : 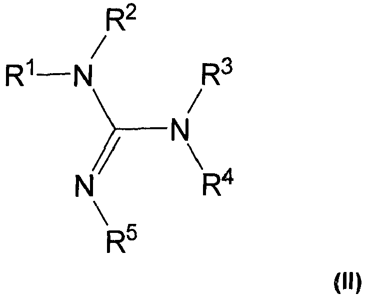 dans laquelle,
- les radicaux R¹, R², R³, R⁴ ou R⁵ identiques ou différents, représentent, indépendamment l'un de l'autre, un groupe alkyle monovalent linéaire ou ramifié, un groupement cycloalkyle, un groupe (cycloalkyl)alkyle, le cycle étant substitué ou non et pouvant comprendre au moins un hétéroatome ou un groupement fluoroalkyle, un groupement aromatique un groupe arylalkyle, un groupement fluoroalkyle, un groupement alkylamine ou alkylguanidine, et
- les radicaux R¹, R², R³ ou R⁴ peuvent être liés deux à deux de manière à former un cycle aliphatique à 3, 4, 5, 6 ou 7 chaînons éventuellement substitué par un ou plusieurs substituants.

Il s'agit de guanidines pentasubstituées et présentent l'avantage d'être liquides, incolores, inodores et solubles dans les matrices silicones.

Selon un mode de réalisation particulier, les composés **(A7)** à **(A9)** suivants sont préférés:

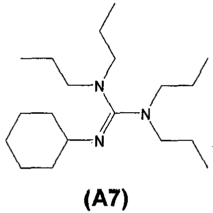

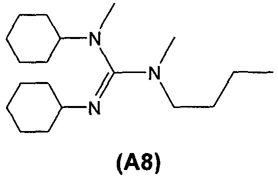

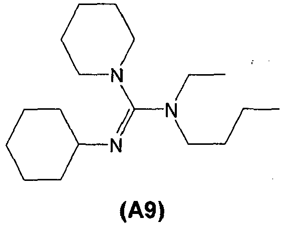

Ils sont par exemple décrits dans la demande de brevet français n° FR-0806610 déposé le 25 novembre 2008.

Des polyorganosiloxanes linéaires non réactif (H) peuvent être introduits dans le dessein d'agir sur les caractéristiques physiques des compositions conformes à l'invention et/ou sur les propriétés mécaniques des élastomères issus du durcissement de ces compositions.

Ces polymères polyorganosiloxanes linéaires non réactif (**H**) sont bien connus; ils comprennent plus spécialement: des polymères α,ω-bis (triorganosiloxy) diorganopolysiloxanes de viscosités d'au moins 10 mPa.s à 25 C, formés essentiellement de motifs diorganosiloxy et d'au plus 1 % de motifs monoorganosiloxy et/ou siloxy, les radicaux organiques liés aux atomes de silicium étant choisis parmi les radicaux méthyle, vinyle et phényle, 60 % au moins de ces radicaux organiques étant des radicaux méthyles et 10 % au plus étant des radicaux vinyles. La viscosité de ces polymères peut atteindre plusieurs dizaines de millions de mPa.s à 25 C; ils comprennent donc des huiles d'aspect fluide à visqueux et des gommes molles à dures. Ils sont préparés selon les techniques usuelles décrites plus précisément dans les brevets français FR-A-978 058, FR-A-1 025 150, FR-A-1 108 764, FR-A-1 370 884. On utilise de préférence les huiles α,ω-bis (triméthylsiloxy) diméthylpolysiloxanes de viscosité allant de 10 mPa. s à 1 000 mPa.s à 25 C. Ces polymères jouent le rôle de plastifiants.

L'introduction d'au moins une charge **I**, différente de E, a pour but de conférer de bonnes caractéristiques mécaniques et rhéologiques aux élastomères découlant du durcissement des compositions conformes à l'invention.

On utilise, par exemple, des charges minérales très finement divisés dont le diamètre particulaire moyen est inférieur à 0,1 µm. Parmi ces charges figurent les silices de combustion et les silices de précipitation; leur surface spécifique BET est généralement supérieure à 40 m²/g. Ces charges peuvent également se présenter sous la forme de produits plus grossièrement divisés, de diamètre particulaire moyen supérieur à 0,1 µm. Comme exemples de telles charges, on peut citer le quartz broyé, les silices de diatomées, l'argile calcinée, l'oxyde de titane du type rutile, les oxydes de fer, de zinc, de chrome, de zirconium, de magnésium, le nitrure de bore, le lithopone, le métaborate de baryum, le sulfate de baryum, le kaolin, les microbilles de verre; leur surface spécifique est généralement inférieure à 30 m²/g.

Ces charges peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysilazanes (brevets français FR-A-1 126 884, FR-A-1 136 885, FR-A-1 236 505, brevet anglais GB-A-1 024 234). Les charges traitées renferment, dans la plupart des cas, de 3 à 30 % de leur poids de composés organosiliciques. Les charges peuvent être constituées d'un mélange de plusieurs types de charges de granulométrie différente; ainsi par exemple, elles peuvent être constituées de 30 à 70 % de silices finement divisées de surface spécifique BET supérieure à 40 m² /g et de 70 à 30 % de silices plus grossièrement divisées de surface spécifique inférieure à 30 m²/g. Ces charges peuvent avoir été traitées en surface

De préférence la charge **I** est présente et est de préférence un kaolin.

Selon un mode de réalisation préféré, la composition polyorganosiloxane **X** selon l'une quelconque des revendications précédentes comprend:
A) pour 100 parties en poids d'au moins un polyorganosiloxane **A** comprenant au moins un groupement alcoxylé et constitué de motifs siloxyles identiques ou différents, de formule :

   (Z)_{b}(R⁴)ₐSiO_{[4-(a+b)]/2} **(1)**

   dans laquelle:
   - le symbole Z = [-(OCH₂CH₂)_{c}-OR⁵], avec c=0 ou 1,
   - a= 0, 1, 2 ou 3; b= 0, 1, 2 ou 3, a+b= 0, 1, 2 ou 3,
   - le symbole R⁴ représente un radical monovalent hydrocarboné en C₁ à C₁₃,
   - le symbole R⁵ représente un radical monovalent hydrocarboné en C₁ à C₆ ou un radical alkoxyalkyle comprenant éventuellement une fonction ester, et
   - avec la condition que pour au moins un motif siloxyle l'indice b soit ≥1 de manière à ce que le polyorganosiloxane **A** contienne au moins un groupement alcoxylé Z,
B) de 0 à 50 parties en poids et de préférence de 0,01 à 50 parties en poids d'au moins un silane polyalcoxylé **B** de formule

   (R²)_{z}Si(OR³)_{(4-z)} **(2)**

   dans laquelle :
   - z = 0 ou 1,
   - le symbole R² représente un radical monovalent hydrocarboné en C₁ à C₁₃, et
   - les symboles R³, identiques ou différents, représentent chacun un radical monovalent hydrocarboné en C₁ à C₆ ou un radical alkoxyalkyle présentant éventuellement une fonction ester
C) de 0,01 à 50 parties en poids d'au moins un noir d'acetylène **D** ayant pour fonction d'absorber une huile utilisée dans un groupe moto-propulseur,
D) de 0,1 à 50 parties en poids d'au moins un tri-hydrate d'aluminium **E** en tant que charge minérale,
E) de 0,1 à 60 parties en poids d'au au moins un promoteur d'adhérence **F** porteur d'au moins une fonction amine,
F) de 0,01 à 50 parties en poids d'au moins une guanidine **G** en tant que catalyseur de condensation,
G) de 0 à 60 parties en poids d'au moins un polyorganosiloxane linéaire non réactif **H,** ce réactif pouvant agir sur les caractéristiques physiques des compositions conformes à l'invention et/ou sur les propriétés mécaniques des élastomères issus du durcissement de ces compositions.
H) de 0 à 250 parties en poids d'au moins une charge **I**, différente de **E,** et
I) de 0 à 20 parties en poids d'au moins un additif **J** tel qu'une base colorante, un pigment ou un agent thixotropant.
avec les conditions supplémentaires que
- ladite composition polyorganosiloxane **X** ne contient ni carbonate de calcium ni siloxane ayant de 2 à 10 motifs siloxyles obtenu par hydrolyse partielle et condensation d'un silane polyalcoxylé, et que
- le polyorganosiloxane A présente un nombre de motifs strictement supérieur à 10, de préférence supérieur à 20 et au maximum égal à 2000.

Comme exemple d'agent thixotropant on peut citer :
- les épaississants inorganiques, l'acide borique et les borates, les titanates, les aluminates, les zirconates ;
- les composés portant des groupements hydroxyles ;
- les composés à base de polyéthylène et/ou polypropylène ;
- les composés comprenant des fonctions amines cycliques ;
- les composés de type polyéther ou comprenant des groupements polyéther, et
- les résines fluorées, de préférence à base de polyfluoroéthylène (PFE) et plus préférentiellement encore à base de polytétrafluoroéthylène (PTFE ou téflon®).

Un autre objet de l'invention concerne un élastomère obtenu par réticulation en présence d'eau apportée par l'air ambiant ou par addition préalable d'eau de la composition polyorganosiloxane **X** selon l'invention et telle que définie ci-dessus.

Un autre objet de l'invention concerne l'utilisation de la composition polyorganosiloxane **X** selon l'invention et telle que définie ci-dessus ou de l'élastomère selon l'invention et tel que défini ci-dessus pour préparer des joints silicones d'étanchéité ayant une bonne résistance au vieillissement dans des fluides utilisés dans un groupe motopropulseur.

Enfin le dernier objet selon l'invention concerne un procédé d'étanchéification et d'assemblage d'au moins un composant d'un groupe moto-propulseur comprenant les étapes a) à d) suivantes:
a) on prépare une composition polyorganosiloxane **X** selon l'invention et telle que définie ci-dessus,
b) on applique ladite composition polyorganosiloxane **X** sur au moins une zone de contact dudit composant de manière continue ou discontinue et éventuellement sous la forme d'un cordon,
c) on laisse réticuler ladite composition polyorganosiloxane **X** en élastomère silicone en présence d'humidité apportée par l'air ambiant ou par addition préalable d'eau de manière à former un joint d'étanchéité, et
d) on assemble ledit composant à un autre composant du groupe moto-propulseur de manière à ce que le joint formé assure l'assemblage et l'étanchéité entre les deux composants du groupe moto-propulseur.

Dans le domaine de l'automobile, les élastomères silicones sont souvent utilisés sous la forme de joints silicones. Le terme "joints silicones" englobent plusieurs types de joints d'étanchéités, à savoir les joints "flués" (JF) également appelés joints écrasés et les joints profilés sur pièce (JPP) également appelés "joints en forme".

Les joints "flués" (JF) sont généralement formés à la suite de l'application d'un cordon pâteux des compositions sur la zone de contact entre 2 éléments métalliques ou plastiques à assembler. Le cordon pâteux est d'abord déposé sur l'un des éléments puis l'autre élément est appliqué sur le premier; il en résulte un écrasement du cordon avant qu'il ne se transforme en élastomère. Ce type de joints s'adresse à des assemblages ne devant pas être couramment démontés (joints de carter d'huile, joints de carter de distribution...).

Les joints "profilés sur pièce" (JPP) sont utilisés en particulier dans le secteur du transport et de l'automobile, pour des applications d'étanchéité sur toutes les pièces moteur exigeant une démontabilité telles à titre d'exemples, le couvre culasse, pompe à huile, pompe à eau, boîte à eau, carter d'huile, carter de distribution, guide d'embrayage. Les "joints profilés sur pièce" (JPP) sont généralement formés à la suite de l'application d'un cordon pâteux des compositions sur la zone de contact entre 2 éléments à assembler. Toutefois, après la dépose du cordon pâteux sur l'un des éléments on laisse réticuler le cordon en élastomère puis on applique le deuxième élément sur le premier. Il en résulte qu'un tel assemblage est aisément démontable puisque l'élément qui est appliqué sur celui ayant reçu le joint, n'adhère pas à ce joint. Par ailleurs le joint, par son caractère élastomérique, épouse les irrégularités des surfaces à jointoyer de ce fait, il est inutile d'usiner soigneusement les surfaces devant être mises en contact les unes avec les autres et de serrer avec force les assemblages obtenus. Ces particularités permettent de supprimer dans une certaine mesure, les joints de fixation, des entretoises, des nervures destinées habituellement à raidir et renforcer les éléments d'assemblages. Le "joint profilés sur pièce" est généralement un cordon fermé d'élastomère silicone de section ovoïde déposé selon un profil bien défini et devant assurer l'étanchéité de deux (ou plusieurs) pièces démontables.

Comme les compositions utilisées dans le procédé selon l'invention durcissent rapidement à température ambiante et même en milieu confiné, il en résulte que les joints d'étanchéité silicones découlant du durcissement de ces compositions peuvent être préparés dans des conditions de fabrication industrielle très contraignantes. Ils peuvent, par exemple, être fabriqués sur les chaînes de montage usuelles de l'industrie automobile munies d'un appareil automatique de dépose des compositions. Cet appareil automatique possède bien souvent une tête mélangeuse et une buse de dépose, celle-ci se déplaçant selon le profil des joints à fabriquer. Les compositions, fabriquées et distribuées au moyen de cet appareil ont de préférence une durée de durcissement bien ajustée pour d'une part éviter des prises en masse dans la tête mélangeuse et d'autre part obtenir une réticulation complète après la fin de la dépose du cordon pâteux sur les pièces à jointoyer. Ces joints "en forme" conviennent plus spécialement pour les joints de couvre-culbuteurs, de couvercles de boîtes à vitesses, d'entretoises de distribution et même de carters d'huile.

Le composant peut être de nature diverse et variée est en verre, en plastique, en métal...

Selon un autre mode de réalisation particulier du procédé selon l'invention le composant du groupe moto-propulseur est choisi parmi le groupe constitué par: une culasse, un carter d'huile, un couvre-culasse, un carter de distribution, un barreau de palier, un bloc cylindre moteur, une boîte de vitesses, une pompe à eau, un boîtier de réaspiration des gaz carter, un filtre à eau, un filtre à huile, une pompe à huile, un boitier comprenant des composants électroniques d'un groupe moto-propulseur ou un carter d'embrayage.

De manière générale, on applique la composition silicone sur le composant soit sous la forme de joint continu ou discontinu, soit sous la forme de couche continue ou discontinue, Pour former une couche continue ou discontinue, on peut utiliser les techniques de dépose ou d'enduction classiques.

Après le dépôt des compositions telles quelles, sur des substrats solides, en atmosphère humide, on constate qu'un processus de durcissement en élastomère se met en oeuvre, il s'effectue de l'extérieur à l'intérieur de la masse déposée. Une peau se forme d'abord en surface puis la réticulation se poursuit en profondeur. La formation complète de la peau, qui se traduit par un toucher non collant de la surface, demande une période de temps de quelques minutes; cette période dépendant du taux d'humidité relative de l'atmosphère entourant les compositions et de la faculté de réticulation de celles-ci.

Des bases monocomposantes sont décrites en détail par exemple dans les brevets EP 141 685, EP 147 323, EP 102 268, EP 21 859, FR 2 121 289 et FR 2 121 631, cités en référence.

D'autres avantages et caractéristiques de la présente invention apparaîtront à la lecture des exemples suivants donnés à titre illustratif nullement limitatif.

### EXEMPLES

### I) Préparation des formulations

### Produits utilisés

**PDMS αω OH:** Polydiméthylsiloxane α,ω-dihydroxylée contenant 0,045% en poids de groupements hydroxyles OH
**PDMS:** Polydiméthysiloxane à fonctions triméthylsilyles bout de chaîne de viscosité 100 mPa.s

### Silanes:

**Dynasylan VTMO:** Vinyltriméthoxysilane (VTMO) (CH₂=CH₂)Si(OCH₃)₃ (fournisseur Evonik) **Dynasylan 6490:** Vinyltriméthoxysilane (VTMO) hydrolysé partiellement et condensé (fournisseur Evonik)

### Catalyseur de fonctionnalisation:

**Lithine:** lithine monohydratée (LiOH.H₂O - 3,8% poids) dissoute dans du méthanol

### Catalyseur de condensation:

**Cy2G:** DicyclohexylMethylButylguanidine (fournisseur BSI)

### Promoteurs d'adhérence :

**Dynasylan DAMO**-T(Evonik): N-(2-Aminoethyl)-3-aminopropyltrimethoxysilane (pureté > 90%)
**Dynasylan DAMO**(Evonik): N-(2-Aminoethyl)-3-aminopropyltrimethoxysilane (pureté >99%)
**Dynasylan GLYMO** (Evonik): gamma-glycidoxypropyltriméthoxysilane
**Dynasylan DS1146** (Evonik) : alkylpolysiloxane, aminoalkyl groups modified
**Silquest A-link597** (Momentive): Tris-(3-(triméthoxysilyl)propyl)isocyanurate

### Charges:

**Winnofil SPM:** carbonate de calcium traité stéarate (fournisseur Solvay)
**Omya BLR3:** carbonate de calcium traité en surface par un stéarate (fournisseur Omya)
**Martinal OL107A:** tri-hydroxyde d'aluminium traité silane D50 1,1-1,7 µm (fournisseur Albermale)
**Martinal OL107ZO:** tri-hydroxyde d'aluminium traité silane D50 1,6-1,9 µm (fournisseur Albermale)
**Noir Y200:** Noir d'acétylène, densité apparente 200kg/m3 (fournisseur SN2A)
**Noir Y70:** Noir d'acétylène, densité apparente 70kg/m3 (fournisseur SN2A)

### Produits préparés

### Synthèse 1-butyl-2,3-dicyclohexyl-1-méthyl guanidine (Cy2G)

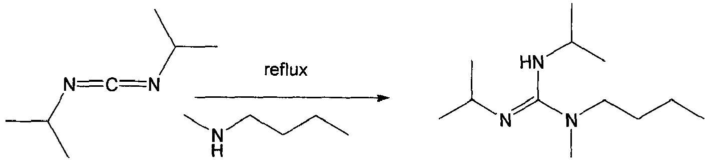

Un mélange de 32.68 g de N-butyl-N-méthylamine (0,375 mol) et de 23.66 g de diisopropylcarbodiimide (0,1875 mol) est chauffé à reflux 3h. L'analyse par CPG montre alors une conversion supérieure à 99.5 % de la diisopropylcarbodiimide. Le mélange final incolore est concentré à 60°C sous 5 mbar pendant 2 h pour donner 40 g d'un liquide incolore et pratiquement inodore de faible viscosité, correspondant à la guanidine attendue (rendement 100 %).
RMN ¹H/CDCl₃ (ppm) : 0.88 (3 H, t), 1.06 (12 H, d), 1.26 (2 H, sex), 1.46 (2 H, quint), 2.67 (3 H, s), 3.05 (2 H, t), 3.35 (2 H, m).

### Exemple comparatif C1 (avec carbonate de calcium et sans hydroxyde d'aluminium)

Dans un mélangeur planétaire sont introduits 626 g d'huile polydiméthylsiloxane α,ω-dihydroxylée contenant 0,045% en poids de groupements hydroxyles OH, 120 g d'un polydiméthysiloxane à fonctions triméthylsilyles bouts de chaîne de viscosité 100 mPa.s, 96 g de Noir d'acétylène Y70 (société SN2A) et 48 g de vinyltriméthoxysilane (Dynasylan VTMO, Evonik). Ce mélange est homogénéisé par rotation du papillon à 200 t/mn pendant 2 minutes. Ensuite 0,6 g d'un catalyseur de fonctionnalisation à base de lithine monohydratée dissoute dans du méthanol sont ajoutés. Suit une phase d'homogénéisation de 4 minutes à 400 t/mn. Puis 300 g de carbonate de calcium BLR3 (société Omya) sont incorporés à vitesse d'agitation 200 t/mn et dispersés pendant 4 minutes supplémentaires à 400 t/mn. Le milieu subit alors une phase de dégazage sous vide partiel de 50 mbar pendant 10 minutes. Puis le mélange est placé sous azote et 6 g de N-(2-Aminoethyl)-3-aminopropyltrimethoxysilane (Dynasylan DAMO, Evonik) sont ajoutés sous agitation de 200 t/mn suivi de 3,6 g de 1-butyl-2,3-dicyclohexyl-1-méthyl guanidine **(Cy2G).**

Le milieu est agité à 400 t/mn pendant 5 minutes puis subit une phase de dégazage sous vide partiel de 40 mbar à 300 t/mn pendant 5 minutes. Enfin, le mélange est transféré en cartouches plastiques fermées.

### Exemple comparatif C2 (avec carbonate de calcium et siloxane qui soit un condensat obtenu par hydrolyse partielle et condensation d'un silane polyalcoxylé tel que décrit dans WO20111114021)

Dans un mélangeur planétaire sont introduits 602 g d'huile polydiméthylsiloxane α,ω-dihydroxylée contenant 0,045% en poids de groupements hydroxyles OH, 120 g d'un polydiméthysiloxane à fonctions triméthylsilyles bouts de chaîne de viscosité 100 mPa.s, 96 g de Noir d'acétylène Y70 (société SN2A) et 24 g de vinyltriméthoxysilane (Dynasylan VTMO, Evonik). Ce mélange est homogénéisé par rotation du papillon à 200 t/mn pendant 2 minutes. Ensuite 0,6 g d'un catalyseur de fonctionnalisation à base de lithine monohydratée dissoute dans le méthanol sont ajoutés. Suit une phase d'homogénéisation de 4 minutes à 400 t/mn. Puis 300 g de carbonate de calcium BLR3 (société Omya) sont incorporés à vitesse d'agitation 200 t/mn et dispersés pendant 4 minutes supplémentaires à 400 t/mn. Le milieu subit alors une phase de dégazage sous vide partiel de 50 mbar pendant 10 minutes. Puis le mélange est placé sous azote et 6 g de N-(2-Aminoethyl)-3-aminopropyltrimethoxysilane (Dynasylan DAMO, Evonik) sont ajoutés sous agitation de 200 t/mn suivi de 48 g de Dynasylan 6490 (Evonik) et de 3,6 g de 1-butyl-2,3-dicyclohexyl-1-méthyl guanidine **(Cy2G).**

Le milieu est agité à 400 t/mn pendant 5 minutes puis subit une phase de dégazage sous vide partiel de 40 mbar à 300 t/mn pendant 5 minutes. Enfin, le mélange est transféré en cartouches plastiques fermées.

### Exemple comparatif C3 (avec carbonate de calcium et siloxane qui soit un condensat obtenu par hydrolyse partielle et condensation d'un silane polyalcoxylé tel que décrit dans WO20111114021)

Dans un mélangeur planétaire sont introduits 602 g d'huile polydiméthylsiloxane α,ω-dihydroxylée contenant 0,045% en poids de groupements hydroxyle OH, 120 g d'un polydiméthysiloxane à fonctions triméthylsilyle bout de chaîne de viscosité 100 mPa.s, 96 g de Noir d'acétylène Y200 (société SN2A) et 24 g de vinyltriméthoxysilane (Dynasylan VTMO, Evonik). Ce mélange est homogénéisé par rotation du papillon à 200 t/mn pendant 2 minutes. Ensuite 0,6 g d'un catalyseur de fonctionnalisation à base de lithine monohydratée dissoute dans le méthanol sont ajoutés. Suit une phase d'homogénéisation de 4 minutes à 400 t/mn. Puis 300 g de carbonate de calcium BLR3 (société Omya) sont incorporés à vitesse d'agitation 200 t/mn et dispersés pendant 4 minutes supplémentaires à 400 t/mn. Le milieu subit alors une phase de dégazage sous vide partiel de 50 mbar pendant 10 minutes. Puis le mélange est placé sous azote et 6 g de N-(2-Aminoethyl)-3-aminopropyltrimethoxysilane (Dynasylan DAMO, Evonik) sont ajoutés sous agitation de 200 t/mn suivi de 48 g de Dynasylan 6490 (Evonik) et de 3,6 g de 1-butyl-2,3-dicyclohexyl-1-méthyl guanidine **(Cy2G).**

Le milieu est agité à 400 t/mn pendant 5 minutes puis subit une phase de dégazage sous vide partiel de 40 mbar à 300 t/mn pendant 5 minutes. Enfin, le mélange est transféré en cartouches plastiques fermées.

### Exemple comparatif C4 (avec hydroxyde d'aluminium et siloxane qui soit un condensat obtenu par hydrolyse partielle et condensation d'un silane polyalcoxylé)

Dans un mélangeur planétaire sont introduits 721 g d'huile polydiméthylsiloxane α,ω-dihydroxylée contenant 0,045% en poids de groupements hydroxyle OH, 120 g d'un polydiméthysiloxane à fonctions triméthylsilyle bout de chaîne de viscosité 100 mPa.s, 96 g de Noir d'acétylène Y200 (société SN2A) et 24 g de vinyltriméthoxysilane (Dynasylan VTMO, Evonik). Ce mélange est homogénéisé par rotation du papillon à 200 t/mn pendant 2 minutes. Ensuite 1,8 g d'un catalyseur de fonctionnalisation à base de lithine monohydratée dissoute dans le méthanol sont ajoutés. Suit une phase d'homogénéisation de 4 minutes à 400 t/mn. Puis 180 g de Martinal OL107A (société Albermale) sont incorporés à vitesse d'agitation 200 t/mn et dispersés pendant 4 minutes supplémentaires à 400 t/mn. Le milieu subit alors une phase de dégazage sous vide partiel de 50 mbar pendant 10 minutes. Puis le mélange est placé sous azote et 6 g de N-(2-Aminoethyl)-3-aminopropyltrimethoxysilane (Dynasylan DAMO-T, Evonik) sont ajoutés sous agitation de 200 t/mn suivi de 48 g de Dynasylan 6490 (Evonik) et de 3,6 g de 1-butyl-2,3-dicyclohexyl-1-méthyl guanidine **(Cy2G).** Le milieu est agité à 400 t/mn pendant 5 minutes puis subit une phase de dégazage sous vide partiel de 40 mbar à 300 t/mn pendant 5 minutes. Enfin, le mélange est transféré en cartouches plastiques fermées.

### Exemple comparatif C5 (avec hydroxyde d'aluminium et promoteur d'adhérence non aminé)

Dans un mélangeur planétaire sont introduits 738 g d'huile polydiméthylsiloxane α,ω-dihydroxylée contenant 0,045% en poids de groupements hydroxyles OH, 120 g d'un polydiméthysiloxane à fonctions triméthylsilyles bout de chaîne de viscosité 100 mPa.s, 96 g de Noir d'acétylène Y200 (société SN2A) et 48 g de vinyltriméthoxysilane (Dynasylan VTMO, Evonik). Ce mélange est homogénéisé par rotation du papillon à 200 t/mn pendant 2 minutes. Ensuite 2,4 g d'un catalyseur de fonctionnalisation à base de lithine monohydratée dissoute dans le méthanol sont ajoutés. Suit une phase d'homogénéisation de 4 minutes à 400 t/mn. Puis 180 g de Martinal OL107A (société Albermale) sont incorporés à vitesse d'agitation 200 t/mn et dispersés pendant 4 minutes supplémentaires à 400 t/mn. Le milieu subit alors une phase de dégazage sous vide partiel de 50 mbar pendant 10 minutes. Puis le mélange est placé sous azote et 12 g de tris-(3-(triméthoxysilyl)propyl)isocyanurate (A-Link597, Momentive) sont ajoutés sous agitation de 200 t/mn suivi de 3,6 g de 1-butyl-2,3-dicyclohexyl-1-méthyl guanidine **(Cy2G).**

Le milieu est agité à 400 t/mn pendant 5 minutes puis subit une phase de dégazage sous vide partiel de 40 mbar à 300 t/mn pendant 5 minutes. Enfin, le mélange est transféré en cartouches plastiques fermées.

### Exemple comparatif C6 (avec hydroxyde d'aluminium et promoteur d'adhérence non aminé)

Dans un mélangeur planétaire sont introduits 654 g d'huile polydiméthylsiloxane α,ω-dihydroxylée contenant 0,045% en poids de groupements hydroxyle OH, 120 g d'un polydiméthysiloxane à fonctions triméthylsilyle bout de chaîne de viscosité 100 mPa.s, 120 g de Noir d'acétylène Y200 (société SN2A) et 48 g de vinyltriméthoxysilane (Dynasylan VTMO, Evonik). Ce mélange est homogénéisé par rotation du papillon à 200 t/mn pendant 2 minutes. Ensuite 2,4 g d'un catalyseur de fonctionnalisation à base de lithine monohydratée dissoute dans le méthanol sont ajoutés. Suit une phase d'homogénéisation de 4 minutes à 400 t/mn. Puis 240 g de carbonate de calcium précipité Winnofil SPM (société Solvay) sont incorporés à vitesse d'agitation 200 t/mn et dispersés pendant 4 minutes supplémentaires à 400 t/mn. Le milieu subit alors une phase de dégazage sous vide partiel de 50 mbar pendant 10 minutes. Puis le mélange est placé sous azote et 12 g de gamma-glycidoxypropyltriméthoxysilane (Dynasylan GLYMO, Evonik) sont ajoutés sous agitation de 200 t/mn, suivi de 3,6 g de 1-butyl-2,3-dicyclohexyl-1-méthyl guanidine **(Cy2G).**

Le milieu est agité à 400 t/mn pendant 5 minutes puis subit une phase de dégazage sous vide partiel de 40 mbar à 300 t/mn pendant 5 minutes. Enfin, le mélange est transféré en cartouches plastiques fermées.

### Exemple selon invention E1 (avec hydroxyde d'aluminium et silane aminé (sans carbonate de calcium et sans siloxane qui soit un condensat obtenu par hydrolyse partielle et condensation d'un silane polyalcoxylé)

Dans un mélangeur planétaire sont introduits 745 g d'huile polydiméthylsiloxane α,ω-dihydroxylée contenant 0,045% en poids de groupements hydroxyle OH, 120 g d'un polydiméthysiloxane à fonctions triméthylsilyle bout de chaîne de viscosité 100 mPa.s, 96 g de Noir d'acétylène Y200 (société SN2A) et 48 g de vinyltriméthoxysilane (Dynasylan VTMO, Evonik). Ce mélange est homogénéisé par rotation du papillon à 200 t/mn pendant 2 minutes. Ensuite 1,2 g d'un catalyseur de fonctionnalisation à base de lithine monohydratée dissoute dans le méthanol sont ajoutés. Suit une phase d'homogénéisation de 4 minutes à 400 t/mn. Puis 180 g de Martinal OL107A (société Albermale) sont incorporés à vitesse d'agitation 200 t/mn et dispersés pendant 4 minutes supplémentaires à 400 t/mn. Le milieu subit alors une phase de dégazage sous vide partiel de 50 mbar pendant 10 minutes. Puis le mélange est placé sous azote et 6 g de N-(2-Aminoethyl)-3-aminopropyltrimethoxysilane (Dynasylan DAMO-T, Evonik) sont ajoutés sous agitation de 200 t/mn, suivi de 3,6 g de 1-butyl-2,3-dicyclohexyl-1-méthyl guanidine **(Cy2G).**

Le milieu est agité à 400 t/mn pendant 5 minutes puis subit une phase de dégazage sous vide partiel de 40 mbar à 300 t/mn pendant 5 minutes. Enfin, le mélange est transféré en cartouches plastiques fermées.

### Exemple selon invention E2 (avec hydroxyde d'aluminium et silane aminé (sans carbonate de calcium et sans siloxane qui soit un condensat obtenu par hydrolyse partielle et condensation d'un silane polyalcoxylé))

Dans un mélangeur planétaire sont introduits 720 g d'huile polydiméthylsiloxane α,ω-dihydroxylée contenant 0,045% en poids de groupements hydroxyles OH, 120 g d'un polydiméthysiloxane à fonctions triméthylsilyles bout de chaîne de viscosité 100 mPa.s, 120 g de Noir d'acétylène Y200 (société SN2A) et 48 g de vinyltriméthoxysilane (Dynasylan VTMO, Evonik). Ce mélange est homogénéisé par rotation du papillon à 200 t/mn pendant 2 minutes. Ensuite 2,4 g d'un catalyseur de fonctionnalisation à base de lithine monohydratée dissoute dans le méthanol sont ajoutés. Suit une phase d'homogénéisation de 4 minutes à 400 t/mn. Puis 180 g de Martinal OL107A (société Albermale) sont incorporés à vitesse d'agitation 200 t/mn et dispersés pendant 4 minutes supplémentaires à 400 t/mn. Le milieu subit alors une phase de dégazage sous vide partiel de 50 mbar pendant 10 minutes. Puis le mélange est placé sous azote et 6 g de N-(2-Aminoethyl)-3-aminopropyltrimethoxysilane (Dynasylan DAMO-T, Evonik) sont ajoutés sous agitation de 200 t/mn, suivi de 3,6 g de 1-butyl-2,3-dicyclohexyl-1-méthyl guanidine.

Le milieu est agité à 400 t/mn pendant 5 minutes puis subit une phase de dégazage sous vide partiel de 40 mbar à 300 t/mn pendant 5 minutes. Enfin, le mélange est transféré en cartouches plastiques fermées.

### Exemple selon invention E3 (avec hydroxyde d'aluminium et silane aminé (sans carbonate de calcium et sans siloxane qui soit un condensat obtenu par hydrolyse partielle et condensation d'un silane polyalcoxylé))

Dans un mélangeur planétaire sont introduits 714 g d'huile polydiméthylsiloxane α,ω-dihydroxylée contenant 0,045% en poids de groupements hydroxyles OH, 120 g d'un polydiméthysiloxane à fonctions triméthylsilyles bout de chaîne de viscosité 100 mPa.s, 120 g de Noir d'acétylène Y200 (société SN2A) et 48 g de vinyltriméthoxysilane (Dynasylan VTMO, Evonik). Ce mélange est homogénéisé par rotation du papillon à 200 t/mn pendant 2 minutes. Ensuite 2,4 g d'un catalyseur de fonctionnalisation à base de lithine monohydratée dissoute dans le méthanol sont ajoutés. Suit une phase d'homogénéisation de 4 minutes à 400 t/mn. Puis 180 g de Martinal OL107A (société Albermale) sont incorporés à vitesse d'agitation 200 t/mn et dispersés pendant 4 minutes supplémentaires à 400 t/mn. Le milieu subit alors une phase de dégazage sous vide partiel de 50 mbar pendant 10 minutes. Puis le mélange est placé sous azote et 12 g de N-(2-Aminoethyl)-3-aminopropyltrimethoxysilane (Dynasylan DAMO-T, Evonik) sont ajoutés sous agitation de 200 t/mn, suivi de 3,6 g de 1-butyl-2,3-dicyclohexyl-1-méthyl guanidine **(Cy2G).**

Le milieu est agité à 400 t/mn pendant 5 minutes puis subit une phase de dégazage sous vide partiel de 40 mbar à 300 t/mn pendant 5 minutes. Enfin, le mélange est transféré en cartouches plastiques fermées.

### Exemple selon invention E4 (avec hydroxyde d'aluminium et silane aminé (sans carbonate de calcium et sans siloxane qui soit un condensat obtenu par hydrolyse partielle et condensation d'un silane polyalcoxylé))

Dans un mélangeur planétaire sont introduits 708 g d'huile polydiméthylsiloxane α,ω-dihydroxylée contenant 0,045% en poids de groupements hydroxyles OH, 120 g d'un polydiméthysiloxane à fonctions triméthylsilyles bout de chaîne de viscosité 100 mPa.s, 120 g de Noir d'acétylène Y200 (société SN2A) et 48 g de vinyltriméthoxysilane (Dynasylan VTMO, Evonik). Ce mélange est homogénéisé par rotation du papillon à 200 t/mn pendant 2 minutes. Ensuite 2,4 g d'un catalyseur de fonctionnalisation à base de lithine monohydratée dissoute dans le méthanol sont ajoutés. Suit une phase d'homogénéisation de 4 minutes à 400 t/mn. Puis 180 g de Martinal OL107A (société Albermale) sont incorporés à vitesse d'agitation 200 t/mn et dispersés pendant 4 minutes supplémentaires à 400 t/mn. Le milieu subit alors une phase de dégazage sous vide partiel de 50 mbar pendant 10 minutes. Puis le mélange est placé sous azote et 18 g de N-(2-Aminoethyl)-3-aminopropyltrimethoxysilane (Dynasylan DAMO-T, Evonik) sont ajoutés sous agitation de 200 t/mn, suivi de 3,6 g de 1-butyl-2,3-dicyclohexyl-1-méthyl guanidine.

Le milieu est agité à 400 t/mn pendant 5 minutes puis subit une phase de dégazage sous vide partiel de 40 mbar à 300 t/mn pendant 5 minutes. Enfin, le mélange est transféré en cartouches plastiques fermées.

### Exemple selon invention E5 (avec hydroxyde d'aluminium et silane aminé (sans carbonate de calcium et sans siloxane qui soit un condensat obtenu par hydrolyse partielle et condensation d'un silane polyalcoxylé))

Dans un mélangeur planétaire sont introduits 708 g d'huile polydiméthylsiloxane α,ω-dihydroxylée contenant 0,045% en poids de groupements hydroxyles OH, 120 g d'un polydiméthysiloxane à fonctions triméthylsilyles bout de chaîne de viscosité 100 mPa.s, 120 g de Noir d'acétylène Y200 (société SN2A) et 48 g de vinyltriméthoxysilane (Dynasylan VTMO, Evonik). Ce mélange est homogénéisé par rotation du papillon à 200 t/mn pendant 2 minutes. Ensuite 2,4 g d'un catalyseur de fonctionnalisation à base de lithine monohydratée dissoute dans le méthanol sont ajoutés. Suit une phase d'homogénéisation de 4 minutes à 400 t/mn. Puis 180 g de Martinal OL107ZO (société Albermale) sont incorporés à vitesse d'agitation 200 t/mn et dispersés pendant 4 minutes supplémentaires à 400 t/mn. Le milieu subit alors une phase de dégazage sous vide partiel de 50 mbar pendant 10 minutes. Puis le mélange est placé sous azote et 18 g de N-(2-Aminoethyl)-3-aminopropyltrimethoxysilane (Dynasylan DAMO-T, Evonik) sont ajoutés sous agitation de 200 t/mn, suivi de 3,6 g de 1-butyl-2,3-dicyclohexyl-1-méthyl guanidine **(Cy2G).**

Le milieu est agité à 400 t/mn pendant 5 minutes puis subit une phase de dégazage sous vide partiel de 40 mbar à 300 t/mn pendant 5 minutes. Enfin, le mélange est transféré en cartouches plastiques fermées.

### Exemple selon invention E6 (avec hydroxyde d'aluminium et silane aminé (sans carbonate de calcium et sans siloxane qui soit un condensat obtenu par hydrolyse partielle et condensation d'un silane polyalcoxylé))

Dans un mélangeur planétaire sont introduits 714 g d'huile polydiméthylsiloxane α,ω-dihydroxylée contenant 0,045% en poids de groupements hydroxyles OH, 120 g d'un polydiméthysiloxane à fonctions triméthylsilyles bout de chaîne de viscosité 100 mPa.s, 120 g de Noir d'acétylène Y200 (société SN2A) et 48 g de vinyltriméthoxysilane (Dynasylan VTMO, Evonik). Ce mélange est homogénéisé par rotation du papillon à 200 t/mn pendant 2 minutes. Ensuite 2,4 g d'un catalyseur de fonctionnalisation à base de lithine monohydratée dissoute dans le méthanol sont ajoutés. Suit une phase d'homogénéisation de 4 minutes à 400 t/mn. Puis 180 g de Martinal OL107A (société Albermale) sont incorporés à vitesse d'agitation 200 t/mn et dispersés pendant 4 minutes supplémentaires à 400 t/mn. Le milieu subit alors une phase de dégazage sous vide partiel de 50 mbar pendant 10 minutes. Puis le mélange est placé sous azote et 12 g de Dynasylan 1146 (Evonik) sont ajoutés sous agitation de 200 t/mn, suivi de 3,6 g de 1-butyl-2,3-dicyclohexyl-1-méthyl guanidine **(Cy2G).** Le milieu est agité à 400 t/mn pendant 5 minutes puis subit une phase de dégazage sous vide partiel de 40 mbar à 300 t/mn pendant 5 minutes. Enfin, le mélange est transféré en cartouches plastiques fermées.

### II) Caractérisation des produits

### a) Propriétés mécaniques

Un joint sous la forme d'un film de 2 mm d'épaisseur est alors préparé avec chacune des formulations et laissé réticuler pendant 7 jours dans des conditions contrôlées (23°C+/- 2°C et 50%+/- 5 d'humidité).

La dureté Shore A (DSA) exprimée en Shore A (ShA) est mesurée selon les indications de la norme ASTM-D2240 ou DIN 53505 et les propriétés mécaniques à la traction ((résistance à la rupture (notée R/r exprimée en MPa), allongement à la rupture (noté A/r exprimé en %) et module à 100% d'allongement (noté M100% exprimé en MPa)) sont mesurées selon les indications de la norme ASTM-D412 ou AFNOR-T-46002. Ces mesures sont effectuées à partir d'éprouvettes d'épaisseur 2 mm après 14 jours de réticulation

### b) Propriétés de résistance aux huiles moteur

Des joints sous forme de films de 2 mm d'épaisseur sont préalablement mis à réticuler en salle conditionnée à 23°C et à 50 % d'hygrométrie pendant 14 jours. Dans chaque cas, 3 éprouvettes de forme carrée découpées dans les joints et dont la dureté Shore A a été préalablement mesurée (par superposition des 3 carrés), sont introduites dans un flacon en verre de 150 ml rempli d'huile 5W30 diesel (distribuée par la société Total). Après chauffage à 150°C pendant 3 jours et retour à la température ambiante, les éprouvettes sont essuyées à l'aide d'un papier absorbant et la dureté Shore A est mesurée à l'aide d'un duromètre Zwick. La dureté résiduelle (notée DSA res), exprimée en %, est égale au ratio DSA avant et après immersion dans huile. Plus ce ratio est élevé meilleure est la résistance à l'huile.

### c) Propriétés d'adhérence

Un joint parallélépipède d'élastomère silicone de 1 mm d'épaisseur est appliqué entre deux sterigmes. L'éprouvette ainsi obtenue, après 14 jours de réticulation à 23°C+/- 2°C et 50% humidité relative+/- 5% est soumise à une sollicitation en traction-cisaillement.

Le collage est caractérisé par la contrainte à la rupture (MPa) et le type de rupture (pourcentage de profil cohésif noté %RC). Une rupture cohésive élevée est recherchée (cible 100%).

Les éprouvettes en Aluminium de qualité AG3 sont préalablement grattées afin d'éliminer la couche d'oxyde puis nettoyées au solvant et séchées.

Pour les tests d'adhérence sur surface polluée d'huile, les éprouvettes sont trempées dans un mélange d'heptane et d'huile Elf Diesel 5W30 (95/5) pendant puis égouttées avant de déposer le joint d'élastomère silicone.

### III) Résultats

**Tableau 1 : Exemples comparatifs**

| **Composition (exprimée en % poids)** | **Exemple comparatif** | **Exemple comparatif (selon WO2011/114021)** | **Exemple comparatif (selon WO2011/114021)** | **Exemple comparatif** | **Exemple comparatif** | **Exemple comparatif** |
|---|---|---|---|---|---|---|
| | **C1** | **C2** | **C3** | **C4** | **C5** | **C6** |
| **PDMS αω OH (A')** | 52,15 | 50,15 | 50,15 | 60,05 | 61,5 | 54,5 |
| **PDMS (H)** | 10 | 10 | 10 | 10 | 10 | 10 |
| **Dynasylan VTMO (B)** | 4 | 2 | 2 | 2 | 4 | 4 |
| **Lithine (C)** | 0,05 | 0,05 | 0,05 | 0,15 | 0,2 | 0,2 |
| **Noir Y70 (D)** | 8 | 8 | | | | |
| **Noir Y200 (D)** | | | **8** | **8** | **8** | **10** |
| **Omya BLR3** | **25** | **25** | **25** | | | |
| **Winnofil SPM** | | | | | | **20** |
| **Martinal OL107A (E)** | | | | **15** | **15** | |
| **Martinal OL107ZO (E)** | | | | | | |
| **Dynasylan DAMO** (F) | 0,5 | 0,5 | 0,5 | | | |
| **Dynasylan DAMO-T (F)** | | | | **0,5** | | |
| **Dynasylan DS1146** (F) | | | | | | |
| **Silquest Alink 597** | | | | | **1** | |
| **Dynasylan GLYMO** | | | | | | **1** |
| **Dynasylan DS6490** | | **4** | **4** | **4** | | |
| **Cy2G (G)** | 0,3 | 0,3 | 0,3 | 0,3 | 0,3 | 0,3 |
| **Propriétés mécaniques après 14 jours de réticulation à 23°C 50%HR** | | | | | | |
| **DSA (ShA)** | 33 | 45 | 40 | 36 | 33 | 38 |
| **R/r (MPa)** | 2,3 | 2,2 | 1,9 | 2,29 | 2,66 | 3,48 |
| **A/r (%)** | 422 | 285 | 302 | 280 | 455 | 743 |
| **M100% (MPa)** | 0.71 | 1,16 | 0,95 | 0,92 | 0,78 | 0,84 |
| **Propriétés mécaniques après traitement dans l'huile Elf Diesel Evolution 5W30 à 150°C pendant 3 jours** | | | | | | |
| **DSA (ShA) (DSA res(%))** | 8 (24%) | 25 (56%) | 21 (53%) | 20 (56%) | 26 (79%) | 21 (55%) |
| **R/r (MPa)** | 1 | 1,3 | 1,36 | 1,9 | 3 | 2,9 |
| **A/r (%)** | 460 | 475 | 397 | 425 | 448 | 550 |
| **M100% (MPa)** | 0,33 | 0,52 | 0,54 | 0,49 | 0,72 | 0,65 |
| **Propriétés d'adhérence en traction cisaillement pour collages 1 mm après 14j de réticulation (Contrainte à la rupture en MPa-%RC)** | | | | | | |
| **Alu AG3** | 1,0 (100%) | 1,2 (90%) | 1,0 (95%) | 1,0 (90%) | 0,9 (90%) | 1,1 (93%) |
| **Alu AG3 pollué** | 0,9 (30%) | 1,0 (85%) | 1,2 (95%) | **0,8 (55%)** | **0,7 (20%)** | 1,0 (60%) |
| **Propriétés d'adhérence après 4 mois stockage en cartouche à température ambiante (Contrainte à la rupture en MPa-%RC)** | | | | | | |
| **Alu AG3** | 1,1 (100%) | 1,3 (90%) | 1,3 (95%) | 1,2 (90%) | 1,1 (95%) | non mesurée |
| **Alu AG3 pollué** | **1,0 (40%)** | **0,8 (10%)** | **0,6 (0%)** | **0,6 (0%)** | **0,2 (0%)** | **0.9 (48)** |
| **Propriétés d'adhérence après 6 mois stockage en cartouche à température ambiante (Contrainte à la rupture en MPa-%RC)** | | | | | | |
| **Alu AG3** | non mesurée | non mesurée | non mesurée | non mesurée | non mesurée | 1,1 (100%) |
| **Alu AG3 pollué** | non mesurée | non mesurée | non mesurée | non mesurée | non mesurée | **0,7 (10%)** |

**Tableau 2: Exemples selon l'invention**

| **Composition (exprimée en % poids)** | **Exemple selon l'invention** | **Exemple selon l'invention** | **Exemple selon l'invention** | **Exemple selon l'invention** | **Exemple selon l'invention** | **Exemple selon l'invention** |
|---|---|---|---|---|---|---|
| | **E1** | **E2** | **E3** | **E4** | **E5** | **E6** |
| **PDMS αω OH (A')** | 62 | 60 | 59,5 | 59 | 59 | 59,5 |
| **PDMS (H)** | 10 | 10 | 10 | 10 | 10 | 10 |
| **Dynasylan VTMO (B)** | 4 | 4 | 4 | 4 | 4 | 4 |
| **Lithine (C)** | 0,2 | 0,2 | 0,2 | 0,2 | 0,2 | 0,2 |
| **Noir Y70 (D)** | | | | | | |
| **Noir Y200 (D)** | **8** | **10** | **10** | **10** | **10** | **10** |
| **Omya BLR3** | | | | | | |
| **Winnofil SPM** | | | | | | |
| **Martinal OL107A (E)** | **15** | **15** | **15** | **15** | | **15** |
| **Martinal OL107ZO (E)** | | | | | **15** | |
| **Dynasylan DAMO (F)** | | | | | | |
| **Dynasylan DAMO-T (F)** | **0,5** | **0,5** | **1** | **1,5** | **1,5** | |
| **Dynasylan DS1146 (F)** | | | | | | **1** |
| **Silquest Alink 597** | | | | | | |
| **Dynasylan GLYMO** | | | | | | |
| **Dynasylan DS6490** | | | | | | |
| **Cy2G (G)** | 0,3 | 0,3 | 0,3 | 0,3 | 0,3 | 0,3 |
| **Propriétés mécaniques après 14 jours de réticulation à 23°C 50%HR** | | | | | | |
| **DSA (ShA)** | 35 | 36 | 39 | 38 | 39 | 39 |
| **R/r (MPa)** | 3,1 | 3,7 | 3,1 | 3,5 | 3,2 | 3,5 |
| **A/r(%)** | 502 | 545 | 440 | 484 | 436 | 480 |
| **M100% (MPa)** | 0,75 | 0,88 | 0,88 | 0,97 | 0,89 | 0,96 |
| **Propriétés mécaniques après traitement dans l'huile Elf Diesel Evolution 5W30 à 150°C pendant 3 jours** | | | | | | |
| **DSA (ShA) (DSA res(%))** | 17 (50%) | 16 (44%) | 16 (41%) | 17 (45%) | 17 (44%) | 18 (46%) |
| **R/r (MPa)** | 1,6 | 1,5 | 1,6 | 2 | 1,6 | 1,8 |
| **A/r (%)** | 481 | 741 | 617 | 763 | 758 | 486 |
| **M100% (MPa)** | 0,4 | 0,26 | 0,32 | 0,38 | 0,37 | 0,42 |
| **Propriétés d'adhérence en traction cisaillement pour collages 1 mm après 14j de réticulation (Contrainte à la rupture en MPa-%RC)** | | | | | | |
| **Alu AG3** | 1,3 (92%) | 1,3 (85%) | 2,0 (100%) | 1,8 (87%) | 1,5 (100%) | 1,0 (95%) |
| **Alu AG3 pollué** | 1,25 (82%) | | 1,7 (65%) | 1,6 (97%) | 1,5 (83%) | 1,3 (70%) |
| **Propriétés d'adhérence après 4 mois stockage en cartouche à température ambiante (Contrainte à la rupture en MPa-%RC)** | | | | | | |
| **Alu AG3 pollué** | 1,1 (100) | 1,2 (95%) | 1,2 (92%) | 1,0 (80%) | non mesurée | non mesurée |
| **Propriétés d'adhérence après 6 mois stockage en cartouche à température ambiante (Contrainte à la rupture en MPa-%RC)** | | | | | | |
| **Alu AG3 pollué** | non mesurée | 1,2 (73%) | 1,3 (93%) | 1,3 (70%) | non mesurée | 1,0 (94%) |
| **Propriétés d'adhérence après 9 mois stockage en cartouche à température ambiante (Contrainte à la rupture en MPa-%RC)** | | | | | | |
| **Alu AG3** | non mesurée | non mesurée | non mesurée | non mesurée | 1,2 (100%) | non mesurée |
| **Alu AG3 pollué** | non mesurée | non mesurée | non mesurée | non mesurée | 1,2 (98%) | non mesurée |

Les exemples comparatifs **C1 à C3** montrent que les propriétés d'adhérence sur surface polluée d'huile moteur des formulations contenant du **carbonate de calcium** sans et avec **siloxane qui soit un condensat obtenu par hydrolyse partielle et condensation d'un silane polyalcoxylé** sont significativement dégradées après 4 mois de stockage à température ambiante en cartouche fermée et ce quelque soit la qualité de Noir d'acétylène utilisée (Y70 ou Y200).

Par contre, les exemples selon l'invention **E1 à E6,** à savoir **en associant du noir d'acetylène, de l'hydroxyde d'aluminium traité en surface et un silane aminé,** permettent de conserver après 6 mois de stockage, de bonnes propriétés d'adhérence sur surface polluée.

Le remplacement du carbonate de calcium par de l'hydroxyde d'aluminium (OL107A) permet d'améliorer significativement les propriétés mécaniques de l'élastomère avant et après traitement dans l'huile moteur mais aussi les propriétés d'adhérence sur surface polluée d'huile qui sont stables après 9 mois de stockage **(E5).**

Les propriétés d'adhérence sur surface polluée d'huile moteur des exemples selon l'invention E1 à E6, sont élevées et stables après quelques mois de stockage, contrairement aux formulations contenant un siloxane qui soit un condensat obtenu par hydrolyse partielle et condensation d'un silane polyalcoxylé (**exemple comparatif C4).**

L'utilisation d'un promoteur d'adhérence sans fonction amine ne permet pas d'atteindre de bonnes propriétés d'adhérence sur surface polluée et cela même avec du carbonate de calcium en remplacement de l'hydroxyde d'aluminium **(exemples comparatifs C5 et C6).**

## Revendications

1. Composition polyorganosiloxane **X** réticulable en élastomère en présence d'humidité apportée par l'air ambiant ou par addition préalable d'eau par des réactions de polycondensation comprenant:
A) au moins un polyorganosiloxane **A** comprenant au moins un groupement alcoxylé et constitué de motifs siloxyles identiques ou différents, de formule :
(Z)_{b}(R⁴)ₐSiO[_{4-(a+b)]/2} **(1)**
dans laquelle :
• le symbole Z = [-(OCH₂CH₂)_{c}-OR⁵], avec c=0 ou 1,
• a= 0, 1, 2 ou 3; b= 0, 1, 2 ou 3, a+b= 0, 1, 2 ou 3,
• le symbole R⁴ représente un radical monovalent hydrocarboné en C₁ à C₁₃,
• le symbole R⁵ représente un radical monovalent hydrocarboné en C₁ à C₆ ou un radical alkoxyalkyle comprenant éventuellement une fonction ester, et
• avec la condition que pour au moins un motif siloxyle l'indice b≥1 de manière à ce que le polyorganosiloxane **A** contienne au moins un groupement alcoxylé Z,
B) éventuellement au moins un silane polyalcoxylé **B** de formule :
(R²)₂Si(OR³)_{(4-z)} **(2)**
dans laquelle :
- z = 0 ou 1,
- le symbole R² représente un radical monovalent hydrocarboné en C₁ à C₁₃, et
- les symboles R³, identiques ou différents, représentent chacun un radical monovalent hydrocarboné en C₁ à C₆ ou un radical alkoxyalkyle présentant éventuellement une fonction ester
C) au moins un noir d'acétylène **D** ayant pour fonction d'absorber une huile utilisée dans un groupe moto-propulseur,
D) au moins un tri-hydrate d'aluminium **E** en tant que charge minérale,
E) au moins un promoteur d'adhérence **F** porteur d'au moins une fonction amine,
F) une quantité catalytiquement efficace d'au moins une guanidine **G** en tant que catalyseur de condensation,
G) éventuellement au moins un polyorganosiloxane linéaire non réactif **H,**
H) éventuellement au moins une charge **I**, différente de E, et
I) éventuellement au moins un additif **J** tel qu'une base colorante, un pigment ou un agent thixotropant.
avec les conditions supplémentaires que
• ladite composition polyorganosiloxane **X** ne contient ni carbonate de calcium ni siloxane ayant de 2 à 10 motifs siloxyles obtenu par hydrolyse partielle et condensation d'un silane polyalcoxylé, et que
• le polyorganosiloxane A présente un nombre de motifs strictement supérieur à 10, de préférence supérieur à 20 et au maximum égal à 2000.

2. Composition polyorganosiloxane **X,** selon la revendication 1, **caractérisée en ce qu'**elle comprend:
A) au moins un polyorganosiloxane **A** comprenant au moins un groupement alcoxylé et constitué de motifs siloxyles identiques ou différents, de formule :
(Z)_{b}(R⁴)ₐSiO_{[4-(a+b)]/2} **(1)**
dans laquelle :
a. le symbole Z = [-(OCH₂CH₂)_{c}-OR⁵], avec c=0 ou 1,
b. a= 0, 1, 2 ou 3; b= 0, 1, 2 ou 3, a+b= 0, 1, 2 ou 3,
c. le symbole R⁴ représente un radical monovalent hydrocarboné en C₁ à C₁₃,
d. le symbole R⁵ représente un radical monovalent hydrocarboné en C₁ à C₆ ou un radical alkoxyalkyle comprenant éventuellement une fonction ester, et
e. avec la condition que pour au moins un motif siloxyle l'indice b≥1 de manière à ce que le polyorganosiloxane **A** contienne au moins un groupement alcoxylé Z,
B) au moins un silane polyalcoxylé **B** de formule :
(R²)_{z}Si(OR³)_{(4-z)} **(2)**
dans laquelle :
- z = 0 ou 1,
- le symbole R² représente un radical monovalent hydrocarboné en C₁ à C₁₃, et
- les symboles R³, identiques ou différents, représentent chacun un radical monovalent hydrocarboné en C₁ à C₆ ou un radical alkoxyalkyle présentant éventuellement une fonction ester
C) au moins un noir d'acétylène **D** ayant pour fonction d'absorber une huile utilisée dans un groupe moto-propulseur,
D) au moins un tri-hydrate d'aluminium **E** en tant que charge minérale,
E) au moins un promoteur d'adhérence **F** porteur d'au moins une fonction amine,
F) une quantité catalytiquement efficace d'au moins une guanidine **G** en tant que catalyseur de condensation,
G) éventuellement au moins un polyorganosiloxane linéaire non réactif **H,**
H) éventuellement au moins une charge **I**, différente de **E,** et
I) éventuellement au moins un additif **J** tel qu'une base colorante, un pigment ou un agent thixotropant.
avec les conditions supplémentaires que
• ladite composition polyorganosiloxane **X** ne contient ni carbonate de calcium ni siloxane ayant de 2 à 10 motifs siloxyles obtenu par hydrolyse partielle et condensation d'un silane polyalcoxylé, et que
• le polyorganosiloxane A présente un nombre de motifs strictement supérieur à 10, de préférence supérieur à 20 et au maximum égal à 2000.

3. Composition polyorganosiloxane **X,** selon les revendications 1 et 2, **caractérisée en ce qu'**elle se présente sous la forme d'un monocomposant RTV1 dont l'emballage est étanche à l'air.

4. Composition polyorganosiloxane **X,** selon les revendications 1 et 2, dans laquelle le polyorganosiloxane réticulable **A** est linéaire et a pour formule développée: 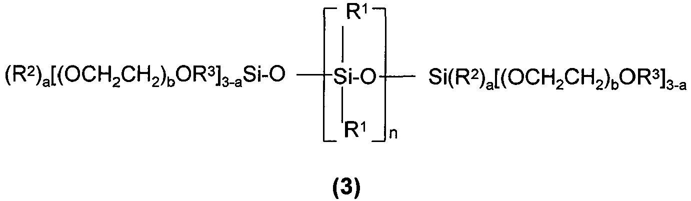 dans laquelle :
• les substituants R1, identiques ou différents, représentent chacun un radical monovalent hydrocarboné saturé ou non en C₁ à C₁₃, substitué ou non substitué, aliphatique, cyclanique ou aromatique ;
• les substituants R2, identiques ou différents, représentent chacun un radical monovalent hydrocarboné saturé ou non en C₁ à C₁₃, substitué ou non substitué, aliphatique, cyclanique ou aromatique ;
• les substituants R3, identiques ou différents, représentent chacun un radical alkyle, linéaire ou ramifié, en C₁ à C₆ ;
• n a une valeur suffisante pour conférer au polyorganopolysiloxane de formule A une viscosité dynamique à 25°C allant de 1.000 à 1.000.000 mPa.s ; et
• l'indice a est égal à zéro ou 1 et l'indice b est égal à zéro ou 1 ;

5. Composition polyorganosiloxane **X,** selon les revendications 1 et 2, dans laquelle le polyorganosiloxane **A** comprenant au moins un groupement alcoxylé est obtenu en faisant réagir, éventuellement in-situ, en présence d'une quantité catalytiquement efficace d'au moins un catalyseur C de fonctionnalisation:
a) au moins un polyorganosiloxane **A'** comprenant des motifs siloxyles de formule :
(R¹)ₓ(OH)_{y}SiO_{(4-x-y)/2} **(4)**
dans laquelle :
- x= 0, 1, 2 ou 3; y= 0, 1, 2 ou 3, x+y= 0, 1, 2 ou 3;
- les substituants R¹, identiques ou différents, représentent chacun un radical monovalent hydrocarboné en C₁ à C₃₀ et choisi parmi le groupe constitué par les radicaux alkyles, cycloalkyles, aryles ; alkaryles et aralkyles, et
- au moins deux motifs siloxyles comprenant un groupement =SiOH sont présents dans le polyorganosiloxane **A'**, de préférence en bouts de chaîne, avec b) au moins un silane polyalcoxylé **B** de formule :
(R²)_{z}Si(OR³)_{(4-z)} **(2)**
dans laquelle :
- z = 0 ou 1,
- le symbole R² représente un radical monovalent hydrocarboné en C₁ à C₁₃, et
- les symboles R³, identiques ou différents, représentent chacun un radical monovalent hydrocarboné en C₁ à C₆ ou un radical alkoxyalkyle présentant éventuellement une fonction ester,

6. Composition polyorganosiloxane **X** selon la revendication 5 dans laquelle le catalyseur **C** de fonctionnalisation est la lithine ou la potasse.

7. Composition polyorganosiloxane **X** selon l'une quelconque des revendications précédentes dans laquelle le catalyseur de condensation **G** est une guanidine répondant à la formule générale **(I):** 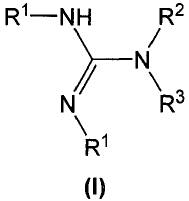 dans laquelle :
• les radicaux R¹, identiques ou différents, représentent, indépendamment l'un de l'autre, un groupe alkyle monovalent linéaire ou ramifié, un groupement cycloalkyle, un groupe (cycloalkyl)alkyle, le cycle étant substitué ou non et pouvant comprendre au moins un hétéroatome ou un groupement fluoroalkyle,
• le radical R² représente un atome d'hydrogène, un groupement alkyle monovalent linéaire ou ramifié, un groupement cycloalkyle, un groupement alkyle substitué par un cycle, substitué ou non et pouvant comprendre au moins un hétéroatome, un groupement aromatique un groupe arylalkyle, un groupement fluoroalkyle, un groupement alkylamine ou alkylguanidine,
• le radical R³ représente un groupement alkyle monovalent linéaire ou ramifié, un groupement cycloalkyle, un groupement alkyle substitué par un cycle, substitué ou non et pouvant comprendre au moins un hétéroatome, un groupement arylalkyle, fluoroalkyle, alkylamine ou alkylguanidine, et
• lorsque le radical R² n'est pas un atome d'hydrogène, les radicaux R² et R³ peuvent être liés pour former un cycle aliphatique à 3, 4, 5, 6 ou 7 chaînons éventuellement substitué par un ou plusieurs substituants.

8. Composition polyorganosiloxane **X** selon l'une quelconque des revendications 1 à 6 dans laquelle le catalyseur de condensation **G** est une guanidine de formule : 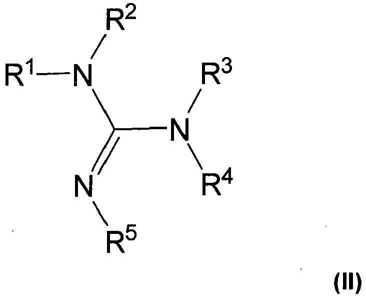 dans laquelle :
• les radicaux R¹, R², R³, R⁴ ou R⁵ identiques ou différents, représentent, indépendamment l'un de l'autre, un groupe alkyle monovalent linéaire ou ramifié, un groupement cycloalkyle, un groupe (cycloalkyl)alkyle, le cycle étant substitué ou non et pouvant comprendre au moins un hétéroatome ou un groupement fluoroalkyle, un groupement aromatique un groupe arylalkyle, un groupement fluoroalkyle, un groupement alkylamine ou alkylguanidine, et
• les radicaux R¹, R², R³ ou R⁴ peuvent être liés deux à deux de manière à former un cycle aliphatique à 3, 4, 5, 6 ou 7 chaînons éventuellement substitué par un ou plusieurs substituants.

9. Composition polyorganosiloxane **X** selon l'une quelconque des revendications précédentes dans laquelle au moins une charge I est présente et de préférence un kaolin.

10. Composition polyorganosiloxane **X** selon l'une quelconque des revendications précédentes comprenant :
A) pour 100 parties en poids d'au moins un polyorganosiloxane **A** comprenant au moins un groupement alcoxylé et constitué de motifs siloxyles identiques ou différents, de formule :
(Z)_{b}(R⁴)ₐSiO_{[4-(a+b)]/2} **(1)**
dans laquelle:
• le symbole Z = [-(OCH₂CH₂)_{c}-OR⁵], avec c=0 ou 1,
• a= 0, 1, 2 ou 3; b= 0, 1, 2 ou 3, a+b= 0, 1, 2 ou 3,
• le symbole R⁴ représente un radical monovalent hydrocarboné en C₁ à C₁₃
• le symbole R⁵ représente un radical monovalent hydrocarboné en C₁ à C₆ ou un radical alkoxyalkyle comprenant éventuellement une fonction ester, et
• avec la condition que pour au moins un motif siloxyle l'indice b soit ≥1 de manière à ce que le polyorganosiloxane **A** contienne au moins un groupement alcoxylé Z,
B) de 0 à 50 parties en poids d'au moins un silane polyalcoxylé **B** de formule
(R²)_{z}Si(OR³)_{(4-z)} **(2)**
dans laquelle :
- z = 0 ou 1,
- le symbole R² représente un radical monovalent hydrocarboné en C₁ à C₁₃, et
- les symboles R³, identiques ou différents, représentent chacun un radical monovalent hydrocarboné en C₁ à C₆ ou un radical alkoxyalkyle présentant éventuellement une fonction ester
C) de 0,1 à 50 parties en poids d'au moins un noir d'acetylène D ayant pour fonction d'absorber une huile utilisée dans un groupe moto-propulseur,
D) de 0,1 à 50 parties en poids d'au moins un tri-hydrate d'aluminium **E** en tant que charge minérale,
E) de 0,1 à 60 parties en poids d'au au moins un promoteur d'adhérence **F** porteur d'au moins une fonction amine,
F) de 0,01 à 50 parties en poids d'au moins une guanidine G en tant que catalyseur de condensation,
G) de 0 à 60 parties en poids d'au moins un polyorganosiloxane linéaire non réactif **H,**
H) de 0 à 250 parties en poids d'au moins une charge **I**, différente de **E**, et
I) de 0 à 20 parties en poids d'au moins un additif **J** tel qu'une base colorante, un pigment ou un agent thixotropant,
avec les conditions supplémentaires que
• ladite composition polyorganosiloxane **X** ne contient ni carbonate de calcium ni siloxane ayant de 2 à 10 motifs siloxyles obtenu par hydrolyse partielle et condensation d'un silane polyalcoxylé, et que
• le polyorganosiloxane A présente un nombre de motifs strictement supérieur à 10, de préférence supérieur à 20 et au maximum égal à 2000.

11. Elastomère obtenu par réticulation en présence d'humidité apportée par l'air ambiant ou par addition préalable d'eau de la composition polyorganosiloxane **X** telle que définie selon l'une quelconque des revendications précédentes 1 à 10.

12. Utilisation de la composition polyorganosiloxane **X** telle que définie selon l'une quelconque des revendications 1 à 10 ou de l'élastomère tel que défini selon la revendication 11 pour préparer des joints silicones d'étanchéité ayant une bonne résistance au vieillissement dans des fluides utilisés dans un groupe motopropulseur.

13. Procédé d'étanchéification et d'assemblage d'au moins un composant d'un groupe moto-propulseur comprenant les étapes a) à d) suivantes:
a) on prépare une composition polyorganosiloxane **X** telle que définie selon l'une quelconque des revendications 1 à 10,
b) on applique ladite composition polyorganosiloxane **X** sur au moins une zone de contact dudit composant de manière continue ou discontinue et éventuellement sous la forme d'un cordon,
c) on laisse réticuler ladite composition polyorganosiloxane **X** en élastomère silicone en présence d'humidité apportée par l'air ambiant ou par addition préalable d'eau de manière à former un joint d'étanchéité, et
d) on assemble ledit composant à un autre composant du groupe moto-propulseur de manière à ce que le joint formé assure l'assemblage et l'étanchéité entre les deux composants du groupe moto-propulseur.

## Patentansprüche

1. Polyorganosiloxanzusammensetzung **X**, die durch Polykondensationsreaktionen in Gegenwart von Feuchtigkeit, die durch die Umgebungsluft oder durch vorherige Zugabe von Wasser bereitgestellt wird, zu einem Elastomer vernetzbar ist, umfassend:
A) mindestens ein Polyorganosiloxan **A,** das mindestens eine Alkoxygruppe umfasst und aus gleichen oder verschiedenen Siloxyleinheiten der Formel:
(Z)_{b}(R⁴)ₐSiO_{[4-(a+b)]/2} **(1)**
besteht, wobei:
• das Symbol Z = [-(OCH₂CH₂)_{c}-OR⁵] mit c = 0 oder 1,
• a = 0, 1, 2 oder 3, b = 0, 1, 2 oder 3, a + b = 0, 1, 2 oder 3,
• das Symbol R⁴ für einen einwertigen C₁- bis C₁₃-Kohlenwasserstoffrest steht,
• das Symbol R⁵ für einen einwertigen C₁- bis C₆-Kohlenwasserstoffrest oder einen Alkoxyalkylrest, der gegebenenfalls eine Esterfunktion umfasst, steht, und
• mit der Maßgabe, dass für mindestens eine Siloxyleinheit der Index b ≥ 1, so dass das Polyorganosiloxan **A** mindestens eine Alkoxygruppe Z umfasst,
B) gegebenenfalls mindestens ein Polyalkoxysilan **B** der Formel:
(R²)_{z}Si(OR³)_{(4-z)} **(2)**
wobei:
- z = 0 oder 1,
- das Symbol R² für einen einwertigen C₁- bis C₁₃-Kohlenwasserstoffrest steht und
- die Symbole R³ gleich oder verschieden sind und jeweils für einen einwertigen C₁- bis C₆-Kohlenwasserstoffrest oder einen Alkoxyalkylrest, der gegebenenfalls eine Esterfunktion umfasst, stehen,
C) mindestens einen Acetylenruß **D,** dessen Funktion darin besteht, ein in einer Antriebsgruppe verwendetes Öl zu absorbieren,
D) mindestens ein Aluminiumtrihydrat **E** als mineralischen Füllstoff,
E) mindestens einen Haftvermittler **F** mit mindestens einer Aminfunktion,
F) eine katalytisch wirksame Menge mindestens eines Guanidins **G** als Kondensationskatalysator,
G) gegebenenfalls mindestens ein unreaktives lineares Polyorganosiloxan **H,**
H) gegebenenfalls mindestens einen Füllstoff **I,** der von **E** verschieden ist, und
I) gegebenenfalls mindestens ein Additiv **J,** wie eine Farbbasis, ein Pigment oder ein Thixotropiermittel,
mit den zusätzlichen Maßgaben, dass
• die Polyorganosiloxanzusammensetzung **X** weder Calciumcarbonat noch durch Partialhydrolyse und Kondensation eines Polyalkoxysilans erhaltenes Siloxan mit 2 bis 10 Siloxyleinheiten enthält und dass
• das Polyorganosiloxan A eine Zahl von Einheiten aufweist, die streng größer als 10, vorzugsweise größer als 20, und höchstens gleich 2000 ist.

2. Polyorganosiloxanzusammensetzung **X** nach Anspruch 1, **dadurch gekennzeichnet, dass** sie Folgendes umfasst:
A) mindestens ein Polyorganosiloxan **A,** das mindestens eine Alkoxygruppe umfasst und aus gleichen oder verschiedenen Siloxyleinheiten der Formel:
(Z)_{b}(R⁴)ₐSiO_{[4-(a+b)]/2} **(1)**
besteht, wobei:
a. das Symbol Z = [-(OCH₂CH₂)_{c}-OR⁵] mit c = 0 oder 1,
b. a = 0, 1, 2 oder 3, b = 0, 1, 2 oder 3, a + b = 0, 1, 2 oder 3,
c. das Symbol R⁴ für einen einwertigen C₁- bis C₁₃-Kohlenwasserstoffrest steht,
d. das Symbol R⁵ für einen einwertigen C₁- bis C₆-Kohlenwasserstoffrest oder einen Alkoxyalkylrest, der gegebenenfalls eine Esterfunktion umfasst, steht, und
e. mit der Maßgabe, dass für mindestens eine Siloxyleinheit der Index b ≥ 1, so dass das Polyorganosiloxan **A** mindestens eine Alkoxygruppe Z umfasst,
B) mindestens ein Polyalkoxysilan **B** der Formel:
(R²)_{z}Si(OR³)_{(4-z)} **(2)**
wobei:
- z = 0 oder 1,
- das Symbol R² für einen einwertigen C₁- bis C₁₃-Kohlenwasserstoffrest steht und
- die Symbole R³ gleich oder verschieden sind und jeweils für einen einwertigen C₁- bis C₆-Kohlenwasserstoffrest oder einen Alkoxyalkylrest, der gegebenenfalls eine Esterfunktion umfasst, stehen,
C) mindestens einen Acetylenruß **D,** dessen Funktion darin besteht, ein in einer Antriebsgruppe verwendetes Öl zu absorbieren,
D) mindestens ein Aluminiumtrihydrat **E** als mineralischen Füllstoff,
E) mindestens einen Haftvermittler **F** mit mindestens einer Aminfunktion,
F) eine katalytisch wirksame Menge mindestens eines Guanidins **G** als Kondensationskatalysator,
G) gegebenenfalls mindestens ein unreaktives lineares Polyorganosiloxan **H,**
H) gegebenenfalls mindestens einen Füllstoff **I,** der von **E** verschieden ist, und
I) gegebenenfalls mindestens ein Additiv **J,** wie eine Farbbasis, ein Pigment oder ein Thixotropiermittel,
mit den zusätzlichen Maßgaben, dass
• die Polyorganosiloxanzusammensetzung **X** weder Calciumcarbonat noch durch Partialhydrolyse und Kondensation eines Polyalkoxysilans erhaltenes Siloxan mit 2 bis 10 Siloxyleinheiten enthält und dass
• das Polyorganosiloxan A eine Zahl von Einheiten aufweist, die streng größer als 10, vorzugsweise größer als 20, und höchstens gleich 2000 ist.

3. Polyorganosiloxanzusammensetzung **X** nach den Ansprüchen 1 und 2, **dadurch gekennzeichnet, dass** sie in Form einer einkomponentigen RTV1-Zusammensetzung, deren Verpackung luftdicht ist, vorliegt.

4. Polyorganosiloxanzusammensetzung **X** nach den Ansprüchen 1 und 2, wobei das vernetzbare Polyorganosiloxan **A** linear ist und die Strukturformel: 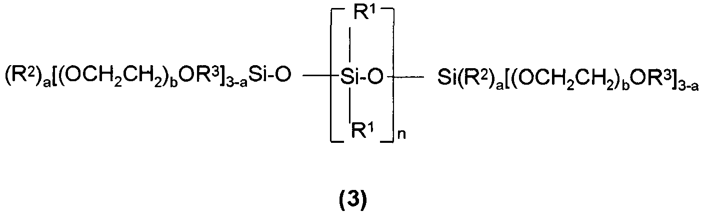 aufweist, wobei:
• die Substituenten R1 gleich oder verschieden sind und jeweils für einen aliphatischen, cyclanischen oder aromatischen, substituierten oder unsubstituierten, gesättigten oder ungesättigten einwertigen C₁- bis C₁₃-Kohlenwasserstoffrest stehen;
• die Substituenten R2 gleich oder verschieden sind und jeweils für einen aliphatischen, cyclanischen oder aromatischen, substituierten oder unsubstituierten, gesättigten oder ungesättigten einwertigen C₁- bis C₁₃-Kohlenwasserstoffrest stehen;
• die Substituenten R3 gleich oder verschieden sind und jeweils für einen linearen oder verzweigten C₁- bis C₆-Alkylrest stehen;
• n einen Wert hat, der ausreicht, um dem Polyorganopolysiloxan der Formel A eine dynamische Viskosität bei 25°C im Bereich von 1000 bis 1.000.000 mPa.s zu verleihen; und
• der Index a gleich null oder 1 ist und der Index b gleich null oder 1 ist.

5. Polyorganosiloxanzusammensetzung **X** nach den Ansprüchen 1 und 2, wobei das Polyorganosiloxan **A,** das mindestens eine Alkoxygruppe umfasst, dadurch erhalten wird, dass man gegebenenfalls in situ in Gegenwart einer katalytisch wirksamen Menge mindestens eines Funktionalisierungskatalysators **C:**
a) mindestens ein Polyorganosiloxan **A',** das Siloxyleinheiten der Formel:
(R¹)ₓ(OH)_{y}SiO_{(4-x-y)/2} **(4)**
umfasst, wobei:
- x=0, 1, 2 oder 3, y= 0, 1, 2 oder 3, x + y = 0, 1, 2 oder 3,
- die Substituenten R¹ gleich oder verschieden sind und jeweils für einen einwertigen C₁- bis C₃₀-Kohlenwasserstoffrest, der aus der Gruppe bestehend aus Alkyl-, Cycloalkyl-, Aryl-, Alkaryl- und Aralkylresten ausgewählt ist, stehen und
- in dem Polyorganosiloxan **A',** vorzugsweise an den Kettenenden, mindestens zwei Siloxyleinheiten, die eine ≡SiOH-Gruppe umfassen, vorliegen, mit
b) mindestens einem Polyalkoxysilan **B** der Formel:
(R²)_{z}Si(OR³)_{(4-z)} **(2)**
wobei:
- z = 0 oder 1,
- das Symbol R² für einen einwertigen C₁- bis C₁₃-Kohlenwasserstoffrest steht und
- die Symbole R³ gleich oder verschieden sind und jeweils für einen einwertigen C₁- bis C₆-Kohlenwasserstoffrest oder einen Alkoxyalkylrest, der gegebenenfalls eine Esterfunktion umfasst, stehen,
umsetzt.

6. Polyorganosiloxanzusammensetzung **X** nach Anspruch 5, wobei es sich bei dem Funktionalisierungskatalysator C um Lithiumhydroxid oder Kaliumhydroxid handelt.

7. Polyorganosiloxanzusammensetzung **X** nach einem der vorhergehenden Ansprüche, wobei es sich bei dem Kondensationskatalysator **G** um ein Guanidin handelt, das der allgemeinen Formel **(I)** entspricht: 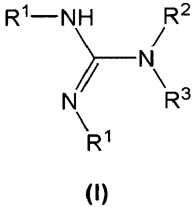 wobei:
• die Reste R¹ gleich oder verschieden sind und unabhängig voneinander für eine lineare oder verzweigte einwertige Alkylgruppe, eine Cycloalkylgruppe, eine (Cycloalkyl)alkylgruppe, wobei der Ring gegebenenfalls substituiert ist und mindestens ein Heteroatom oder eine Fluoralkylgruppe enthalten kann, stehen;
• der Rest R² für ein Wasserstoffatom, eine lineare oder verzweigte einwertige Alkylgruppe, eine Cycloalkylgruppe, eine durch einen Ring, der gegebenenfalls substituiert ist und mindestens ein Heteroatom enthalten kann, substituierte Alkylgruppe, eine aromatische Gruppe, eine Arylalkylgruppe, eine Fluoralkylgruppe, eine Alkylamingruppe oder eine Alkylguanidingruppe steht;
• der Rest R³ für eine lineare oder verzweigte einwertige Alkylgruppe, eine Cycloalkylgruppe, eine durch einen Ring, der gegebenenfalls substituiert ist und mindestens ein Heteroatom enthalten kann, substituierte Alkylgruppe, eine Arylalkylgruppe, eine Fluoralkylgruppe, eine Alkylamingruppe oder eine Alkylguanidingruppe steht; und
• dann, wenn der Rest R² nicht für ein Wasserstoffatom steht, die Reste R² und R³ zu einem 3-, 4-, 5-, 6- oder 7-gliedrigen aliphatischen Ring, der gegebenenfalls durch einen oder mehrere Substituenten substituiert ist, verbunden sein können.

8. Polyorganosiloxanzusammensetzung **X** nach einem der Ansprüche 1 bis 6, wobei es sich bei dem Kondensationskatalysator **G** um ein Guanidin der Formel: 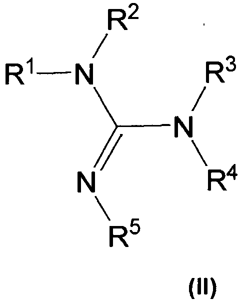 handelt, wobei:
• die Reste R¹, R², R³, R⁴ oder R⁵ gleich oder verschieden sind und unabhängig voneinander für eine lineare oder verzweigte einwertige Alkylgruppe, eine Cycloalkylgruppe, eine (Cycloalkyl)alkylgruppe, wobei der Ring gegebenenfalls substituiert ist und mindestens ein Heteroatom oder eine Fluoralkylgruppe enthalten kann, eine aromatische Gruppe, eine Arylalkylgruppe, eine Fluoralkylgruppe, eine Alkylamingruppe oder eine Alkylguanidingruppe stehen und
• die Reste R¹, R², R³ oder R⁴ paarweise so verbunden sein können, dass sie einen 3-, 4-, 5-, 6- oder 7-gliedrigen aliphatischen Ring bilden, der gegebenenfalls durch einen oder mehrere Substituenten substituiert ist.

9. Polyorganosiloxanzusammensetzung **X** nach einem der vorhergehenden Ansprüche, wobei mindestens ein Füllstoff **I** vorliegt und vorzugsweise ein Kaolin ist.

10. Polyorganosiloxanzusammensetzung **X** nach einem der vorhergehenden Ansprüche, umfassend:
A) auf 100 Gewichtsteile mindestens eines Polyorganosiloxans **A,** das mindestens eine Alkoxygruppe umfasst und aus gleichen oder verschiedenen Siloxyleinheiten der Formel:
(Z)_{b}(R⁴)ₐSiO_{(4-(a+b)]1/2} **(1)**
besteht, wobei:
• das Symbol Z = [-(OCH₂CH₂)_{c}-OR⁵] mit c = 0 oder 1,
• a = 0, 1, 2 oder 3, b = 0, 1, 2 oder 3, a + b = 0, 1, 2 oder 3,
• das Symbol R⁴ für einen einwertigen C₁- bis C₁₃-Kohlenwasserstoffrest steht,
• das Symbol R⁵ für einen einwertigen C₁- bis C₆-Kohlenwasserstoffrest oder einen Alkoxyalkylrest, der gegebenenfalls eine Esterfunktion umfasst, steht, und
• mit der Maßgabe, dass für mindestens eine Siloxyleinheit der Index b ≥ 1, so dass das Polyorganosiloxan **A** mindestens eine Alkoxygruppe Z umfasst,
B) 0 bis 50 Gewichtsteile mindestens eines Polyalkoxysilans **B** der Formel:
(R²)_{z}Si(OR³)_{(4-z)} **(2)**
wobei:
- z = 0 oder 1,
- das Symbol R² für einen einwertigen C₁- bis C₁₃-Kohlenwasserstoffrest steht und
- die Symbole R³ gleich oder verschieden sind und jeweils für einen einwertigen C₁- bis C₆-Kohlenwasserstoffrest oder einen Alkoxyalkylrest, der gegebenenfalls eine Esterfunktion umfasst, stehen,
C) 0,1 bis 50 Gewichtsteile mindestens eines Acetylenrußes **D,** dessen Funktion darin besteht, ein in einer Antriebsgruppe verwendetes Öl zu absorbieren,
D) 0,1 bis 50 Gewichtsteile mindestens eines Aluminiumtrihydrats **E** als mineralischen Füllstoff,
E) 0,1 bis 60 Gewichtsteile mindestens eines Haftvermittlers **F** mit mindestens einer Aminfunktion,
F) 0,01 bis 50 Gewichtsteile mindestens eines Guanidins G als Kondensationskatalysator,
G) 0 bis 60 Gewichtsteile mindestens eines unreaktiven linearen Polyorganosiloxans **H,**
H) 0 bis 250 Gewichtsteile mindestens eines Füllstoffs **I,** der von **E** verschieden ist, und
I) 0 bis 20 Gewichtsteile mindestens eines Additivs **J,** wie einer Farbbasis, eines Pigments oder eines Thixotropiermittels,
mit den zusätzlichen Maßgaben, dass
• die Polyorganosiloxanzusammensetzung **X** weder Calciumcarbonat noch durch Partialhydrolyse und Kondensation eines Polyalkoxysilans erhaltenes Siloxan mit 2 bis 10 Siloxyleinheiten enthält und dass
• das Polyorganosiloxan A eine Zahl von Einheiten aufweist, die streng größer als 10, vorzugsweise größer als 20, und höchstens gleich 2000 ist.

11. Elastomer, erhalten durch Vernetzung der Polyorganosiloxanzusammensetzung **X** gemäß einem der vorhergehenden Ansprüche 1 bis 10 in Gegenwart von Feuchtigkeit, die durch die Umgebungsluft oder durch vorherige Zugabe von Wasser bereitgestellt wird.

12. Verwendung der Polyorganosiloxanzusammensetzung **X** gemäß einem der Ansprüche 1 bis 10 oder des Elastomers gemäß Anspruch 11 zur Herstellung von Silikondichtungen mit guter Alterungsbeständigkeit in Fluiden, die in einer Antriebsgruppe verwendet werden.

13. Verfahren zum Abdichten und Montieren mindestens eines Bauteils einer Antriebsgruppe mit den folgenden Schritten a) bis d):
a) man stellt eine Polyorganosiloxanzusammensetzung **X** gemäß einem der Ansprüche 1 bis 10 her,
b) man bringt die Polyorganosiloxanzusammensetzung **X** kontinuierlich oder diskontinuierlich und gegebenenfalls in Form einer Raupe auf mindestens eine Kontaktzone des Bauteils auf,
c) man lässt die Polyorganosiloxanzusammensetzung **X** in Gegenwart von Feuchtigkeit, die durch die Umgebungsluft oder durch vorherige Zugabe von Wasser bereitgestellt wird, zu einem Silikonelastomer vernetzen, wobei man eine Dichtung erhält, und
d) man montiert das Bauteil so auf ein anderes Bauteil der Antriebsgruppe, dass die gebildete Dichtung die Montage und Abdichtung zwischen den beiden Bauteilen der Antriebsgruppe gewährleistet.

## Claims

1. Polyorganosiloxane composition **X** that is crosslinkable into elastomer in the presence of moisture provided by the ambient air or by prior addition of water, via polycondensation reactions comprising:
A) at least one polyorganosiloxane **A** comprising at least one alkoxylated group and consisting of identical or different siloxyl units, of formula:
(Z)_{b}(R⁴)ₐSiO_{[4-(a+b)]/2} **(1)**
in which:
• the symbol Z = [-(OCH₂CH₂)_{c}-OR⁵], with c=0 or 1,
• a= 0, 1, 2 or 3; b= 0, 1, 2 or 3, a+b= 0, 1, 2 or 3,
• the symbol R⁴ represents a C₁ to C₁₃ monovalent hydrocarbon-based radical,
• the symbol R⁵ represents a C₁ to C₆ monovalent hydrocarbon-based radical or an alkoxyalkyl radical optionally comprising an ester function, and
• with the condition that for at least one siloxyl unit, the index b≥1 such that the polyorganosiloxane **A** contains at least one alkoxylated group Z,
B) optionally at least one polyalkoxylated silane **B** of formula:
(R²)_{z}Si(OR³)_{(4-z)} **(2)**
in which:
- z = 0 or 1,
- the symbol R² represents a C₁ to C₁₃ monovalent hydrocarbon-based radical, and
- the symbols R³, which may be identical or different, each represent a C₁ to C₆ monovalent hydrocarbon-based radical or an alkoxyalkyl radical optionally containing an ester function,
C) at least one acetylene black **D** whose function is to absorb an oil used in a powertrain,
D) at least one aluminum trihydrate **E** as mineral filler,
E) at least one adhesion promoter **F** bearing at least one amine function,
F) a catalytically effective amount of at least one guanidine **G** as condensation catalyst,
G) optionally at least one unreactive linear polyorganosiloxane **H,**
H) optionally at least one filler **I**, different from **E,** and
I) optionally at least one additive **J** such as a coloring base, a pigment or a thixotropic agent,
with the additional conditions that
• said polyorganosiloxane composition **X** contains neither any calcium carbonate nor any siloxane containing from 2 to 10 siloxyl units obtained by partial hydrolysis and condensation of a polyalkoxylated silane, and that
• the polyorganosiloxane **A** has a number of units strictly greater than 10, preferably greater than 20 and at most equal to 2000.

2. Polyorganosiloxane composition **X** according to Claim 1, **characterized in that** it comprises:
A) at least one polyorganosiloxane **A** comprising at least one alkoxylated group and consisting of identical or different siloxyl units, of formula:
(Z)_{b}(R⁴)ₐSiO_{[4-(a+b)]/2} **(1)**
in which:
a. the symbol Z = [-(OCH₂CH₂)_{c-}OR⁵], with c=0 or 1,
b. a= 0, 1, 2 or 3; b= 0, 1, 2 or 3, a+b= 0, 1, 2 or 3,
c. the symbol R⁴ represents a C₁ to C₁₃ monovalent hydrocarbon-based radical,
d. the symbol R⁵ represents a C₁ to C₆ monovalent hydrocarbon-based radical or an alkoxyalkyl radical optionally comprising an ester function, and
e. with the condition that for at least one siloxyl unit, the index b≥1 such that the polyorganosiloxane **A** contains at least one alkoxylated group Z,
B) at least one polyalkoxylated silane **B** of formula:
(R²)_{z}Si(OR³)_{(4-z)} **(2)**
in which:
- z = 0 or 1,
- the symbol R² represents a C₁ to C₁₃ monovalent hydrocarbon-based radical, and
- the symbols R³, which may be identical or different, each represent a C₁ to C₆ monovalent hydrocarbon-based radical or an alkoxyalkyl radical optionally containing an ester function,
C) at least one acetylene black **D** whose function is to absorb an oil used in a powertrain,
D) at least one aluminum trihydrate **E** as mineral filler,
E) at least one adhesion promoter **F** bearing at least one amine function,
F) a catalytically effective amount of at least one guanidine **G** as condensation catalyst,
G) optionally at least one unreactive linear polyorganosiloxane **H,**
H) optionally at least one filler **I**, different from **E,** and
I) optionally at least one additive **J** such as a coloring base, a pigment or a thixotropic agent,
with the additional conditions that
• said polyorganosiloxane composition **X** contains neither any calcium carbonate nor any siloxane containing from 2 to 10 siloxyl units obtained by partial hydrolysis and condensation of a polydlkoxylated silane, and that
• the polyorganosiloxane **A** has a number of units strictly greater than 10, preferably greater than 20 and at most equal to 2000.

3. Polyorganosiloxane composition **X** according to Claims 1 and 2, **characterized in that** it is in the form of an RTV-1 one-pack composition whose package is airtight.

4. Polyorganosiloxane composition **X** according to Claims 1 and 2, in which the crosslinkable polyorganosiloxane **A** is linear and has the structural formula: 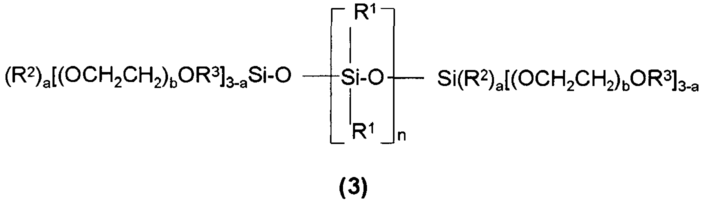 in which:
• the substituents R1, which may be identical or different, each represent a substituted or unsubstituted aliphatic, cyclanic or aromatic C₁ to C₁₃ saturated or unsaturated monovalent hydrocarbon-based radical;
• the substituents R2, which may be identical or different, each represent a substituted or unsubstituted aliphatic, cyclanic or aromatic C₁ to C₁₃ saturated or unsaturated monovalent hydrocarbon-based radical;
• the substituents R3, which may be identical or different, each represent a linear or branched C₁ to C₆ alkyl radical;
• n has a value sufficient to give the polyorganopolysiloxane of formula **A** a dynamic viscosity at 25°C ranging from 1000 to 1 000 000 mPa.s; and
• the index a is equal to zero or 1 and the index b is equal to zero or 1.

5. Polyorganosiloxane composition **X** according to Claims 1 and 2, in which the polyorganosiloxane **A** comprising at least one alkoxylated group is obtained by reacting, optionally *in situ,* in the presence of a catalytically effective amount of at least one functionalization catalyst **C:**
a) at least one polyorganosiloxane **A'** comprising siloxyl units of formula:
(R¹)ₓ(OH)_{y}SiO_{(4-x-y)/2} **(4)**
in which:
- x= 0, 1, 2 or 3; y= 0, 1, 2 or 3, x+y= 0, 1, 2 or 3;
- the substituents R¹, which may be identical or different, each represent a C₁ to C₃₀ monovalent hydrocarbon-based radical chosen from the group consisting of alkyl, cycloalkyl, aryl; alkaryl and aralkyl radicals, and
- at least two siloxyl units comprising a group ≡SiOH are present in the polyorganosiloxane **A',** preferably at the chain ends, with b) at least one polyalkoxylated silane **B** of formula:
(R²)_{z}Si(OR³)_{(4-z)} **(2)**
in which:
- z = 0 or 1,
- the symbol R² represents a C₁ to C₁₃ monovalent hydrocarbon-based radical, and
- the symbols R³, which may be identical or different, each represent a C₁ to C₆ monovalent hydrocarbon-based radical or an alkoxyalkyl radical optionally containing an ester function.

6. Polyorganosiloxane composition **X** according to Claim 5, in which the functionalization catalyst **C** is lithium hydroxide or potassium hydroxide.

7. Polyorganosiloxane composition **X** according to any one of the preceding claims, in which the condensation catalyst **G** is a guanidine corresponding to the general formula **(I):** 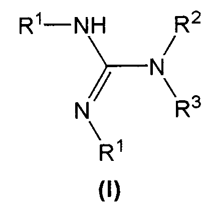 in which:
• the radicals R¹, which may be identical or different, represent, independently of each other, a linear or branched monovalent alkyl group, a cycloalkyl group, a (cycloalkyl)alkyl group, the ring being optionally substituted and possibly comprising at least one heteroatom or a fluoroalkyl group,
• the radical R² represents a hydrogen atom, a linear or branched monovalent alkyl group, a cycloalkyl group, an alkyl group substituted with a ring that is optionally substituted and that possibly comprises at least one heteroatom, an aromatic group, an arylalkyl group, a fluoroalkyl group, an alkylamine group or an alkylguanidine group,
• the radical R³ represents a linear or branched monovalent alkyl group, a cycloalkyl group, an alkyl group substituted with a ring that is optionally substituted and that possibly comprises at least one heteroatom, an arylalkyl, fluoroalkyl, alkylamine or alkylguanidine group, and
• when the radical R² is not a hydrogen atom, the radicals R² and R³ may be linked to form a 3-, 4-, 5-, 6- or 7-membered aliphatic ring optionally substituted with one or more substituents.

8. Polyorganosiloxane composition X according to any one of Claims 1 to 6, in which the condensation catalyst G is a guanidine of formula: 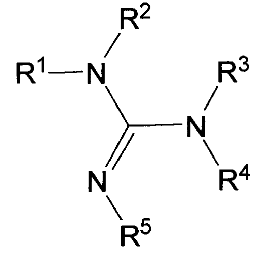 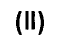 in which:
• the radicals R¹, R², R³, R⁴ or R⁵, which may be identical or different, represent, independently of each other, a linear or branched monovalent alkyl group, a cycloalkyl group, a (cycloalkyl)alkyl group, the ring being optionally substituted and possibly comprising at least one heteroatom or a fluoroalkyl group, an aromatic group, an arylalkyl group, a fluoroalkyl group, an alkylamino group or an alkylguanidine group, and
• the radicals R¹, R², R³ or R⁴ may be linked in pairs so as to form a 3-, 4-, 5-, 6- or 7-membered aliphatic ring optionally substituted with one or more substituents.

9. Polyorganosiloxane composition **X** according to any one of the preceding claims, in which at least one filler I is present, preferably a kaolin.

10. Polyorganosiloxane composition **X** according to any one of the preceding claims, comprising:
A) per 100 parts by weight of at least one polyorganosiloxane **A** comprising at least one alkoxylated group and consisting of identical or different siloxyl units, of formula:
(Z)_{b}(R⁴)ₐSiO_{[4-(a+b)]/2} **(1)**
in which:
• the symbol Z = [-(OCH₂CH₂)_{c}-OR⁵], with c=0 or 1,
• a= 0, 1, 2 or 3; b= 0, 1, 2 or 3, a+b= 0, 1, 2 or 3,
• the symbol R⁴ represents a C₁ to C₁₃ monovalent hydrocarbon-based radical,
• the symbol R⁵ represents a C₁ to C₆ monovalent hydrocarbon-based radical or an alkoxyalkyl radical optionally comprising an ester function, and
• with the condition that for at least one siloxyl unit, the index b is ≥1 such that the polyorganosiloxane **A** contains at least one alkoxylated group Z,
B) from 0 to 50 parts by weight of at least one polyalkoxylated silane **B** of formula
(R²)_{z}Si(OR³)_{(4-z)} **(2)**
in which:
- z = 0 or 1,
- the symbol R² represents a C₁ to C₁₃ monovalent hydrocarbon-based radical, and
- the symbols R³, which may be identical or different, each represent a C₁ to C₆ monovalent hydrocarbon-based radical or an alkoxyalkyl radical optionally containing an ester function,
C) from 0.1 to 50 parts by weight of at least one acetylene black **D** whose function is to absorb an oil used in a powertrain,
D) from 0.1 to 50 parts by weight of at least one aluminum trihydrate E as mineral filler,
E) from 0.1 to 60 parts by weight of at least one adhesion promoter F bearing at least one amine function,
F) from 0.01 to 50 parts by weight of at least one guanidine **G** as condensation catalyst,
G) from 0 to 60 parts by weight of at least one nonreactive linear polyorganosiloxane **H,**
H) from 0 to 250 parts by weight of at least one filler **I,** different from **E,** and
I) from 0 to 20 parts by weight of at least one additive **J** such as a coloring base, a pigment or a thixotropic agent,
with the additional conditions that
• said polyorganosiloxane composition **X** contains neither any calcium carbonate nor any siloxane containing from 2 to 10 siloxyl units obtained by partial hydrolysis and condensation of a polyalkoxylated silane, and that
• the polyorganosiloxane **A** has a number of units strictly greater than 10, preferably greater than 20 and at most equal to 2000.

11. Elastomer obtained by crosslinking, in the presence of moisture provided by the ambient air or by prior addition of water, of the polyorganosiloxane composition **X** as defined according to any one of the preceding Claims 1 to 10.

12. Use of the polyorganosiloxane composition **X** as defined according to any one of Claims 1 to 10 or of the elastomer as defined according to claim 11, for preparing silicone leakproofing seals which have good resistance to aging in fluids used in a powertrain.

13. Process for sealing and assembling at least one component of a powertrain, comprising steps a) to d) below:
a) a polyorganosiloxane composition **X** as defined according to any one of Claims 1 to 10 is prepared,
b) said polyorganosiloxane composition **X** is applied to at least one zone of contact of said component continuously or discontinuously and optionally in the form of a bead,
c) said polyorganosiloxane composition **X** is left to crosslink into silicone elastomer in the presence of moisture provided by the ambient air or by prior addition of water so as to form a leakproofing seal, and
d) said component is assembled with another component of the powertrain so that the seal formed ensures the assembly and leakproofing between the two components of the powertrain.
